(19) Europäisches Patentamt
European Patent Office
Office européen des brevets

(11) **EP 2 053 430 A2**

(12) **EUROPEAN PATENT APPLICATION**

(43) Date of publication:
**29.04.2009 Bulletin 2009/18**

(51) Int Cl.:
*G02B 3/08* (2006.01)     *G02B 5/02* (2006.01)
*G02B 5/04* (2006.01)

(21) Application number: **08253419.9**

(22) Date of filing: **22.10.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **25.10.2007 JP 2007277958**

(71) Applicant: **Sumitomo Chemical Company, Limited Tokyo 104-8260 (JP)**

(72) Inventors:
• Ohta, Hirofumi
  Niihama-shi, Ehime 792-002 (JP)
• Ahn, Gihwan
  Cheongju-si, Chungcheongbuk-do 360-808 (KR)

(74) Representative: **Nicholls, Michael John**
J.A. Kemp & Co.
14 South Square
Gray's Inn
London
WC1R 5JJ (GB)

(54) **Light control plate, surface light source device, and transmission type image display apparatus**

(57)     A light control plate, a surface light source device, and a transmission type image display apparatus which can emit light widened within a predetermined angle range are provided. In a light control plate 40, a plurality of light components from respective light sources incident on a main face 40a are emitted from an exit surface 40b. A corresponding area 41 for a space between two light sources adjacent to each other in the main face of the light control plate 40 has first to third regions 41A to 41C. The first and third regions have a plurality of first light path control parts 42 for widening first incident light $F1_i$; ($F2_i$) within a predetermined angle range and emitting thus widened light from the exit surface by utilizing refraction of the first incident light on a plurality of planar parts $41_{k,m}$. The second region has a second light path control part 43 for emitting second incident light $F1_i$, $F2_i$ within the predetermined angle range from the exit surface by utilizing total reflection within a prism part $46_m$. The first incident light is light from the light source closer to the first light path control part in the two light sources, while the second incident light is light from the two light sources.

Fig.2

EP 2 053 430 A2

**Description**

BACKGROUND OF THE INVENTION

Field of the Invention

The present invention relates to a light control plate, a surface light source device, and a transmission type image display apparatus.

Related Background Art

In transmission type image display apparatus such as liquid crystal display apparatus, surface light source devices have been in use as light sources for outputting backlight for liquid crystal display parts. An example of such surface light source devices is one disclosed in Patent Document 1. This surface light source device is constructed such that a light diffuser is placed in front of a plurality of light sources arranged separated from each other within a lamp box. The light diffuser is provided with a deflection structure part having such a form that light incident thereon from the plurality of light sources can be emitted substantially perpendicular to the surface of the light diffuser. As a result, by passing through the light diffuser, the light fed from the plurality of light sources can be diffused while being guided to the front side of the surface of the light diffuser, so that parallel light having a uniform luminance distribution can be outputted as backlight.

Patent Document: Japanese Patent Application Laid-Open No. 2006-351519

SUMMARY OF THE INVENTION

Though the above-mentioned surface light source device can output parallel light having a uniform luminance distribution as explained, there are cases where unevenness occurs in resulting pictures and an appropriate viewing angle is to be secured, for example, depending on the purpose of use of the surface light source device, and one in which the light emitted from the surface light source device is widened within a predetermined emission angle range is also demanded.

Therefore, it is an object of the present invention to provide a light control plate, a surface light source device, and a transmission type image display apparatus which can emit light widened within a predetermined angle range.

The present invention provides a light control plate arranged separated from a plurality of light sources disposed with a gap therebetween, the light control plate having a main face facing the plurality of light sources and a flat exit surface opposing the main face and emitting light from the plurality of light sources incident on the main face; wherein a corresponding area for a space between two of the light sources adjacent to each other in the main face has first and third regions formed with a plurality of first light path control parts, arranged in the disposing direction of the plurality of light sources, for widening first incident light within a predetermined angle range and emitting thus widened light from the exit surface, and a second region arranged between the first and third regions and formed with at least one second light path control part for emitting second incident light within the predetermined angle range from the exit surface; wherein the first incident light is a light component outputted from the light source closer to the first light path control part in the two adjacent light sources; wherein the second incident light is constituted by respective light components outputted from the two adjacent light sources; wherein the first light path control part includes a plurality of planar parts extending in one direction and receiving the first incident light; wherein the first light path control part widens the first incident light within the predetermined range and emits thus widened light from the exit surface by utilizing refraction of the first incident light incident on the plurality of planar parts; wherein the second light path control part has a plurality of prism parts extending in the one direction, having a substantially triangular cross-sectional form, and receiving the second incident light; and wherein the second light path control part emits the second incident light within the predetermined angle range from the exit surface by utilizing total reflection within the plurality of prism parts of the second incident light incident on the prism parts.

In this structure, the first to third regions within each corresponding area in the main face are arranged in order from the first to third regions in the disposing direction. Therefore, the first region is positioned on one light source side in the adjacent two light sources, while the third region is positioned on the other light source side. In this case, respective light components from the light sources closer to the first and third regions are incident on the first and third regions, respectively, whereby light from the light source closer to the first light path control part in the two adjacent light sources is incident on the first light path control part as the first incident light. On the other hand, each of the light components from the two adjacent light sources is incident on the second region positioned between the first and third regions, whereby each of the light components outputted from the two adjacent light sources is incident on the second light path control part as the second incident light.

In the structure of the light control plate in accordance with the present invention, the first and third regions located closer to the light sources are formed with a plurality of first light path control parts. When the first incident light is incident on the first light path control part, the first incident light is emitted from the exit surface as being widened within a predetermined angle range by refraction by a plurality of planar parts in the first light path control part. The second region positioned between the first and third regions is formed with a plurality of second light path control parts. The second incident light incident on the second light path control part is emitted from the exit surface as being widened within the predetermined angle range by total reflection within a plurality of prism parts in the second light path control part. Thus, each of the light components incident on the first and second light path control parts is emitted as being widened into the predetermined angle range, whereby the light widened into the predetermined angle range can be emitted from the exit surface.

Preferably, in the light control plate in accordance with the present invention, respective angles of inclination of the plurality of planar parts with respect to the exit surface are defined such that the first incident light incident on each planar part is refracted in such a direction as to be emitted from the exit surface with an output angle within the predetermined angle range; each of the plurality of prism parts has first and second side faces; the angles of inclination of the first and second side faces with respect to the exit surface are defined such that the second incident light incident on the second side face is totally reflected by the first side face in such a direction as to be emitted from the exit surface with an output angle within the predetermined angle range, while the second incident light incident on the first side face is totally reflected by the second side face in such a direction as to be emitted from the exit surface with an output angle within the predetermined angle range; the second incident light incident on the first side face is a light component outputted from the light source closer to the first side face in the adjacent two light sources; and the second incident light incident on the second side face is a light component outputted from the light source closer to the second side face in the adjacent two light sources.

Since the plurality of planar parts in the first light path control part are tilted with respect to the exit surface as mentioned above, the first incident light can be emitted from the exit surface with an output angle within the predetermined angle range by utilizing refraction of the first incident light incident on each planar part. When the output angle of the first incident light from the exit surface, which is determined by the respective angles of inclination of the planar parts with respect to the exit surface, is appropriately allocated within the predetermined angle range, the first incident light incident on the first light path control part can be widened into the predetermined angle range. Since each of the prism parts in the second light path control part has first and second side faces, while the angles of inclination of the first and second side faces with respect to the exit surface are defined as mentioned above, the second incident light incident on the first and second side faces can be emitted from the exit surface with an output angle within the predetermined angle range by utilizing total reflection within the prism parts. When the output angle of the second incident light from the exit surface, which is determined by the angles of inclination of the first and second side faces, is appropriately allocated within the predetermined angle range, the second incident light incident on the second light path control part can be widened into the predetermined angle range as in the first light path control part.

Preferably, in this case, the first incident light components incident on the plurality of planar parts have respective output angles different from each other; angles selected at fixed angle intervals from within the predetermined angle range are allocated to the second incident light components totally reflected by the respective first side faces in the plurality of prism parts; and angles selected at fixed angle intervals from within the predetermined angle range are allocated to the second incident light components totally reflected by the respective second side faces in the plurality of prism parts. In this case, the first and second incident light components respectively incident on the first and second light path control parts are easier to widen to the predetermined angle range.

Preferably, in the light control plate in accordance with the present invention, the second region has a plurality of second light path control parts. When the second region has a plurality of second light path control parts, light can be widened into the predetermined angle range more securely.

Preferably, in the light control plate in accordance with the present invention, the plurality of planar parts in the first light path control parts have respective sizes defined such that light components incident on the plurality of planar parts and then emitted from the exit surface within the predetermined angle range have a substantially uniform luminance angle distribution in the predetermined angle range. The first light path control part is formed in the first and third regions that are closer to the light source than is the second region. Therefore, the first light path control part is more susceptible to the luminance distribution of the light outputted from the light source. Hence, when the sizes of the planar parts in the first light path control part are defined as mentioned above such that the first incident light components incident on the first light path control part have a substantially constant luminance angle distribution within the predetermined angle range, the luminance angle distribution of the light einitted from the exit surface tends to become substantially constant.

Preferably, in the light control plate in accordance with the present invention, each of the first and third regions has a fourth region positioned directly above the light source and a fifth region positioned between the second and fourth regions; the fourth region is formed with at least one of the plurality of first light path control parts; the first light path control part within the fourth region has a recessed cross-sectional form, while the plurality of planar parts in the first light path control part are arranged in series so as to construct a surface of the first light path control part; the fifth region is formed with a plurality of first light path control parts; and a step is formed between planar parts adjacent to each other and positioned on the second or fourth region side in the plurality of planar parts in each of the first light path control parts within the fifth region.

Light from the light source is likely to be incident substantially in parallel with a normal to the exit surface as the first incident light component on the first light path control part formed in the fourth region. Therefore, the first light path control part having a recessed cross-sectional form can be formed, while a surface of the first light path control part can be constructed by a plurality of planar parts. In the fifth region, on the other hand, the first incident light component is likely to advance in a direction oblique to the above-mentioned normal direction, so as to be made incident on the first light path control region. When making the first light path control part similar to that in the fourth region in this case, positions of both ends of the first light path control part may deviate from each other in the above-mentioned normal direction under the influence of the angles of inclination of the planar parts and the like. When a step is provided in the first light path control part on the second or fourth region side in the fifth region as mentioned above, the size of the step can make the positions of both ends of the first light path control part in the above-mentioned normal direction coincide with each other. As a result, the light control plate can be formed while keeping a desirable thickness.

The surface light source device in accordance with the present invention comprises a plurality of light sources disposed with a gap therebetween, and the light control plate in accordance with the present invention arranged separated from the plurality of light sources.

In this case, respective light components outputted from the plurality of light sources pass through the light control plate, so as to be emitted from the exit surface of the light control plate. Here, when the light components from two light sources adjacent to each other in the plurality of light sources are incident on corresponding areas for the two light sources in the light control plate, they are emitted from the exit surface as being widened into the predetermined angle range as mentioned above, whereby the above-mentioned surface light source device can yield emission light widened into the predetermined angle range.

The transmission type image display apparatus in accordance with the present invention comprises the surface light source device in accordance with the present invention, and a transmission type image display part arranged separated from the surface light source device in a direction substantially orthogonal to the disposing direction of the plurality of light sources in the surface light source device.

In this transmission type image display apparatus, the emission light widened into the predetermined angle range outputted from the surface light source device is incident on the transmission type image display apparatus. As a result, a wider viewing angle can be secured as compared with a case where parallel light is incident on the transmission type image display part, for example.

BRIEF DESCRIPTION OF THE DRAWINGS

Fig. 1 is a sectional view schematically showing the structure of an embodiment of the transmission type image display apparatus in accordance with the present invention;
Fig. 2 is a schematic view enlarging a portion of a light control plate;
Fig. 3 is a schematic view of the light control plate for explaining the light path control part;
Fig. 4 is a partly enlarged view of an area directly above a light source in the light control plate;
Fig. 5 is a partly enlarged view of the area directly above the light source in the light control plate;
Fig. 6 is an enlarged view of a part including a portion of a first region in the light control plate;
Fig. 7 is a view for explaining an example of methods for defining angles of inclination and sizes of planar parts in a first light path control part;
Fig. 8 is a view for explaining an example of methods for defining angles of inclination and sizes of planar parts in the first light path control part;
Fig. 9 is a view for explaining a method of designing the first light path control part, illustrating the state of the first light path control part before providing steps;
Fig. 10 is a schematic view of the first light path control part when provided with the steps;
Fig. 11 is a schematic view of the first light path control part when a plurality of planar parts are partly rearranged;
Fig. 12 is a schematic view of an example of second light path control parts in a second region;
Fig. 13 is a view showing a light control plate model for explaining a method of defining angles of inclination of two side faces in prism parts;
Fig. 14 is a view for explaining the method of defining angles of inclination of two side faces in prism parts;
Fig. 15 is a view for explaining the method of defining angles of inclination of two side faces in prism parts;
Fig. 16 is a schematic view of an example of second light path control parts;

Fig. 17 is a schematic view of a simulation model for a simulation;
Fig. 18 is a chart showing an area where $-0.5 \leq z \leq 0.5$ in a light control unit;
Fig. 19 is a chart showing an area where $0.5 \leq z \leq 1.5$ in the light control unit;
Fig. 20 is a chart showing an area where $1.5 \leq z \leq 2.5$ in the light control unit;
Fig. 21 is a chart showing an area where $2.5 \leq z \leq 3.5$ in the light control unit;
Fig. 22 is a chart showing an area where $3.5 \leq z \leq 4.5$ in the light control unit;
Fig. 23 is a chart showing an area where $4.5 \leq z \leq 5.5$ in the light control unit;
Fig. 24 is a graph showing results of a simulation of luminance angle distribution; and
Fig. 25 is a perspective view showing an example of an embodiment of the light control plate.

DESCRIPTION OF THE PREFERRED EMBODIMENTS

In the following, embodiments of the light control plate, surface light source device, and transmission type image display apparatus will be explained with reference to the drawings. In the explanation of the drawings, the same constituents will be referred to with the same numerals or letters while omitting their overlapping descriptions. Ratios of dimensions and the like in the drawings do not always correspond to those explained.

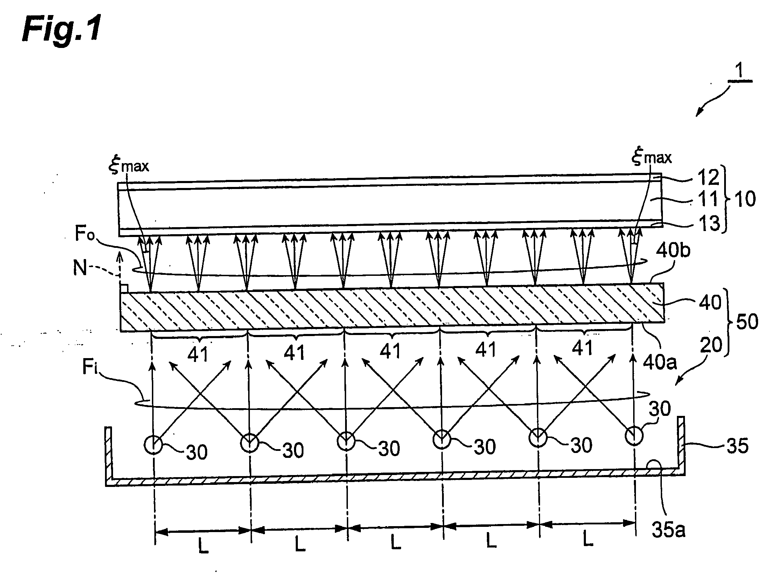

Fig. 1 is a sectional view schematically showing the structure of one embodiment of the transmission type image display apparatus in accordance with the present invention. The transmission type image display apparatus 1 is a liquid crystal display apparatus which is constructed such that a surface light source device 50 is provided behind (under) a transmission type image display part 10 formed by laminating polarizing plates 12, 13 on the upper and lower faces of a liquid crystal cell 11, respectively. In this embodiment, the side arranged with the transmission type image display part 10 is referred to as "upper" or "front" side of the surface light source device 50.

As the liquid crystal cell 11 and polarizing plates 12, 13, those used in conventional transmission type image display apparatus such as liquid crystal display apparatus can be employed. Examples of the liquid crystal cell 11 include known liquid crystal cells of TFT and STN types. A pair of the upper and lower polarizing plates 12, 13 are arranged in a state where their respective transmission axes are orthogonal to each other, while these transmission axes are arranged parallel to the orientation direction of liquid crystal molecules in the liquid crystal cell 11.

The surface light source device 50 has a light source part 20 and a light control plate 40 which is arranged separated from the light source part 20 on the front side thereof, i.e., on the transmission type image display part 10 side. By using the light control plate 40, the surface light source device 50 collects light $F_i$ outputted from the light source part 20 and supplies thus collected light as backlight to the transmission type image display part 10.

The light source part 20 has a plurality of light sources 30 for outputting the light $F_i$, while the plurality of light sources 30 are disposed at equally-spaced intervals L so that the respective center axes of the light sources 30 are positioned within the same plane. The interval L between the center axes of the light sources 30, 30 adjacent to each other is 15 mm to 150 mm, for example. Each light source 30 is shaped like a rod extending in a direction orthogonal to the disposing direction of the plurality of light sources 30, an example of which is one shaped like a straight tube such as fluorescent lamp (cold cathode fluorescent tube). Though the light source 30 is shaped like a rod here, point light sources such as LED can also be used.

The plurality of light sources 30 are preferably arranged within a lamp box 35 as shown in Fig. 1, while the inner face 35a of the lamp box 35 is preferably formed as a light reflecting surface. In this case, the light $F_i$ fed from the light sources 30 can reliably be outputted to the transmission type image display part 10 side.

The light control plate 40 has a substantially rectangular parallelepiped form and covers all of the plurality of light sources 30. The light control plate 40 is arranged separated from the light source part 20 by 5 mm to 50 mm, for example. The thickness of the light control plate 40 is 0.1 to 15 mm, for example, preferably 0.5 mm to 10 mm, more preferably 1 mm to 5 mm.

The light control plate 40 is made of a transparent material, e.g., transparent resin or transparent glass. Examples of the transparent resin include polycarbonate resins, ABS resins (acrylonitrile/styrene/butadiene copolymer resins), methacrylic resins, MS resins (methyl methacrylate/styrene copolymer resins), polystyrene resins, AS resins (acrylonitrile/styrene copolymer resins), and polyolefin resins such as polyethylene and polypropylene. The light control plate 40 may contain a small amount of diffusing agents. Slight diffusion is permissible on surfaces.

The light control plate 40 widens the light $F_i$, which is incident thereon from a rear face (main face) 40a side, within a predetermined angle range with respect to a normal N to an exit face 40b arranged opposite to the rear face 40a and emits thus widened light. Hence, letting $\xi$ be the output angle with respect to the normal N to the exit surface 40b and $\xi_{max}$ be the maximum output angle, the light control plate 40 widens the incident light $F_i$ within the range of $-\xi_{max} \leq \xi \leq \xi_{max}$ and emits thus widened light as light $F_o$ from the exit surface 40b. $\xi_{max}$ is 20°, for example.

On the rear face 40a of the light control plate 40, a plurality of fine structures for emitting the light $F_i$ within a predetermined angle range are formed in respective areas 41 corresponding to the spaces between pairs of light sources 30, 30 adjacent to each other. The structure of the corresponding area 41 will now be explained.

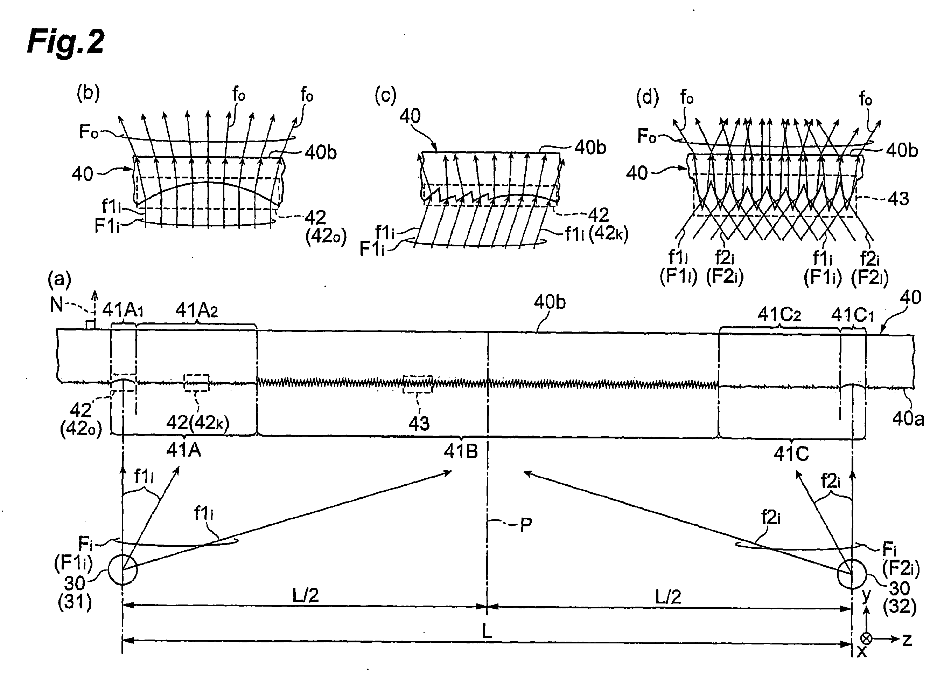

Fig. 2 is a schematic view enlarging a portion of a light control plate. Fig. 2 enlarges a portion of the light control plate 40 including one corresponding area 41 and also illustrates its corresponding two light sources 30, 30 adjacent to each other for convenience.

In the following explanation, one (on the left side in Fig. 2) of the two light sources 30, 30 in Fig. 2 will also be referred to as a light source 31, while the other will also be referred to as a light source 32. Accordingly, the respective light components $F_i$ outputted from the light sources 31 and 32 will also be referred to as light components $F1_i$ and $F2_i$, respectively. For convenience, the light components $F1_i$ and $F2_i$ will also be explained as assemblies of a plurality of light beams $f1_i$, $f2_i$, while the light $F_o$ will also be explained as an assembly of light beams $f_o$. Also, as shown in Fig. 2 (a), let the z-axis direction be the direction in which the light sources 31, 32 are arranged (the horizontal direction in Fig. 2(a)), the y-axis direction be the direction, orthogonal to the z axis, in which the light control plate 40 is positioned with respect to the light source 31, and the x-axis direction be the direction orthogonal to the y-and z-axis directions.

As shown in Fig. 2(a), the corresponding area 41 is constituted by first to third regions 41A, 41B, 41C. The first and third regions 41A, 41C include areas directly above the light sources 31, 32 and are positioned on both sides of the second area 41B. In this embodiment, the corresponding area 41 is constructed such that their halves (left and right halves in Fig. 2) are symmetric about the center position between the two light sources 31, 32, i.e., a virtual plane P arranged orthogonal to the exit surface 40b at a position distanced by L/2 from the light source 31 to the light source 32. Therefore, the structures of the half region of the corresponding area 41 on the light source 31 side, i.e., the first region 41A, and the half of the second region 41B on the first area 41A side will mainly be explained.

As shown in Figs. 2(a) to (d), the first and second regions 41A, 41B have a plurality of light path control parts (first and second light path control parts) 42 and 43 as fine structures extending in the x-axis direction (one direction). A plurality of light path control parts 42 are densely formed in the z-axis direction within the first region 41A. A plurality of light path control parts 43 are densely formed in the z-axis direction within the second region 41B. The width (length in the z-axis direction) of each of the light path control parts 42, 43 is 50 $\mu$m to 10 mm, for example, preferably 50 $\mu$m to 5 nm, more preferably 50 $\mu$m to 2 mm.

As shown in Figs. 2(b) and (c), the light path control part 42 is constructed such as to include a plurality of planar parts tilted at different angles with respect to a plane substantially parallel to the output surface 40b. The light path control part 42 is used for widening the light $F1_i$ as first incident light, which is incident on the light path control part 42 after being outputted from the closer light source 31 in the two light sources 31, 32, within the angle range of at least $-\xi_{max}$ but not greater than $\xi_{max}$ with respect to the normal N to the exit surface 40b and outputting thus widened light from the exit surface 40b.

As shown in Fig. 2(b), the plurality of light path control parts 42 can be dividend into light path control parts $42_0$ which are formed directly above the light source 31 and receive the light beams $f1_i$ substantially parallel to the normal N to the exit surface 40b, and light path control parts $42_k$ (where k is an integer of 1 or greater) where the light beams $f1_i$ tilted with respect to the normal N are incident. In other words, when an area which is directly above the light source 31 and receives the light beams $f1_i$ substantially parallel to the normal N to the exit surface 40b is referred to as a fourth region $41A_1$ in the first region 41A, and an area between the fourth region $41A_1$ and second region 41B in the first region 41A is referred to as a fifth region $41A_2$, the fourth region $41A_1$ is formed with the light path control part $42_0$, while the fifth region $41A_2$ is formed with the light path control parts $42_k$.

Though one light path control part $42_0$ is constructed in the fourth region $41A_1$ in Figs. 2(a) and (b), the fourth region $41A_1$ may have a plurality of light path control parts $42_0$ depending on the size of the fourth region $41A_1$, the distance between the control plate 40 and light source 31, and the like.

As shown in Fig. 2(d), the light path control part 43 is constructed such as to include a plurality of prism parts. The light path control part 43 is used for outputting the light components $F1_i$, $F2_i$ as the second incident light, which are incident on the light path control part 43 after being outputted from the two light sources 31, 32, within a predetermined angle range of at least $-\xi_{max}$ but not greater than $\xi_{max}$ with respect to the normal N to the exit surface 40b from the exit surface 40b by utilizing total reflection within the prism parts. The light path control part 43 is arranged such that light components $F1_i$, $F2_i$ incident on the prism parts are totally reflected within the prism parts, so as to be outputted as being widened within the output angle range mentioned above.

As mentioned above, the corresponding area 41 is symmetric about the plane P. Therefore, as with the first region 41A, the third region 41C is constructed such as to include a plurality of light path control parts 42, while these light path control parts 42 can be constituted by light path control parts $42_0$ and $42_k$. The third region 41C can be constituted by fourth and fifth regions $41C_1$ and $41C_2$ corresponding to the fourth and fifth regions $41A_1$ and $41A_2$ in the first region 41A. In this case, the fourth region $41C_1$ is formed with the light path control part $42_0$, while the fifth region $41C_2$ is formed with the light path control parts $42_k$. The fourth region $41C_1$ may have a plurality of light path control parts $42_0$ as with the first region 41A.

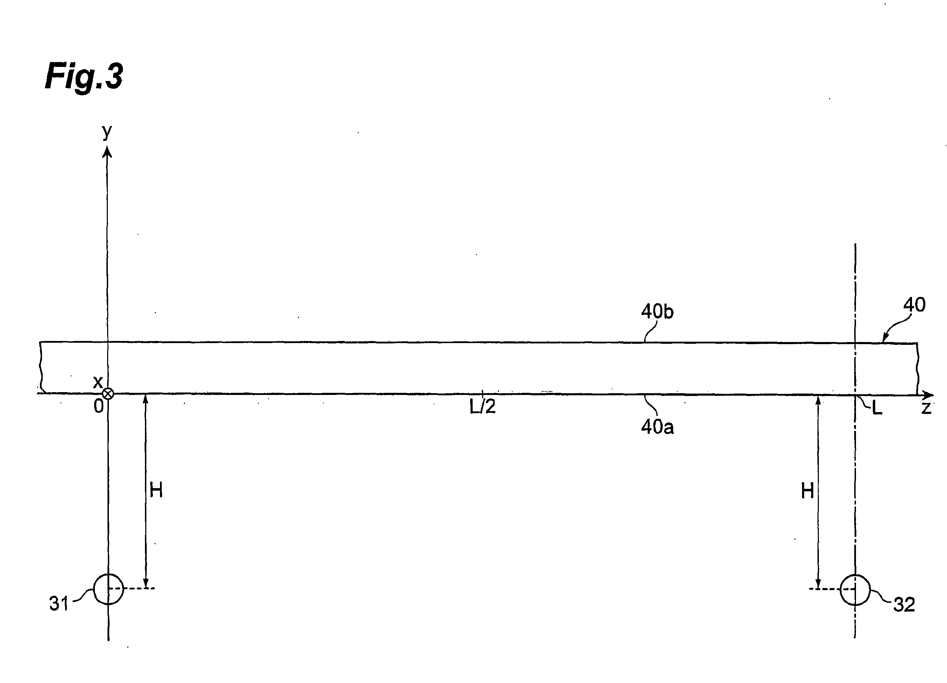

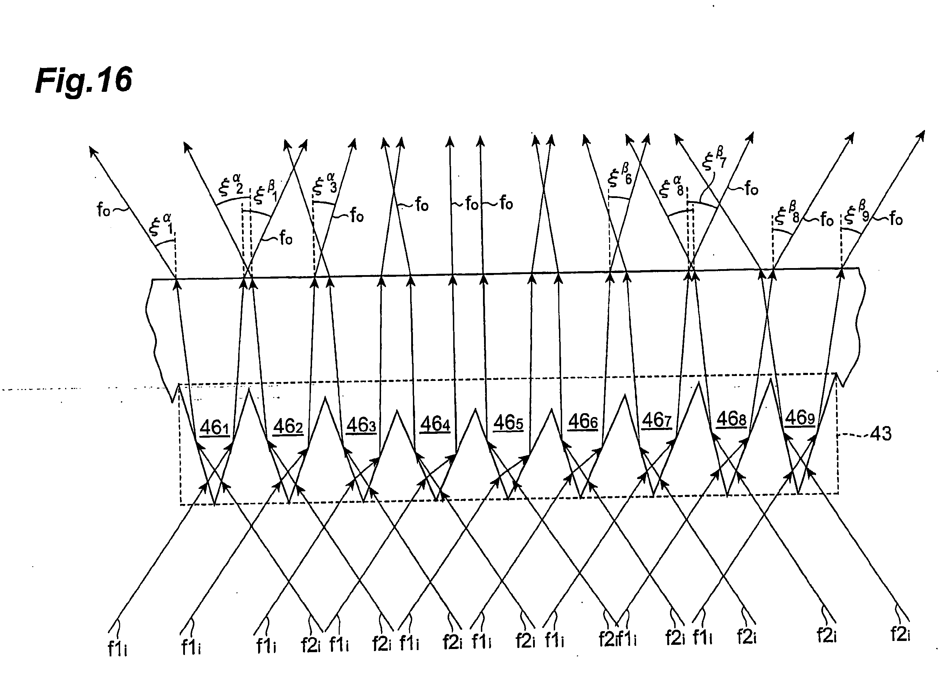

The structures of the light path control parts 42 ($42_0$, $42_k$) and 43 will now be explained in detail with reference to Figs. 3 to 17.

Fig. 3 shows the positional relationship between the light control plate and a three-dimensional coordinate system which is used for convenience in the explanation of this embodiment. Fig. 3 also shows the light sources 31, 32 for illustrating the positional relationship between the light control plate 40 and the light sources 31, 32 in the three-dimensional coordinate system. In the following explanation, as shown in Fig. 3, the three-dimensional coordinate system composed of x, y, and z axes is assumed such that the position directly above the light source 31 in the rear face 40a (i.e., the position directly above the center of the light source 31) when no fine structures are supposed to be formed is taken as its origin O. The directions in which the x, y, and z axes shown in Fig. 3 extend correspond to the x-, y-, and z-axis directions shown in Fig. 2, respectively. Let H be the distance between the x axis and the light sources 31, 32, i.e., the distance between the light control plate 40 and the light sources 31, 32. The distance H is 5 mm to 50 mm, for example.

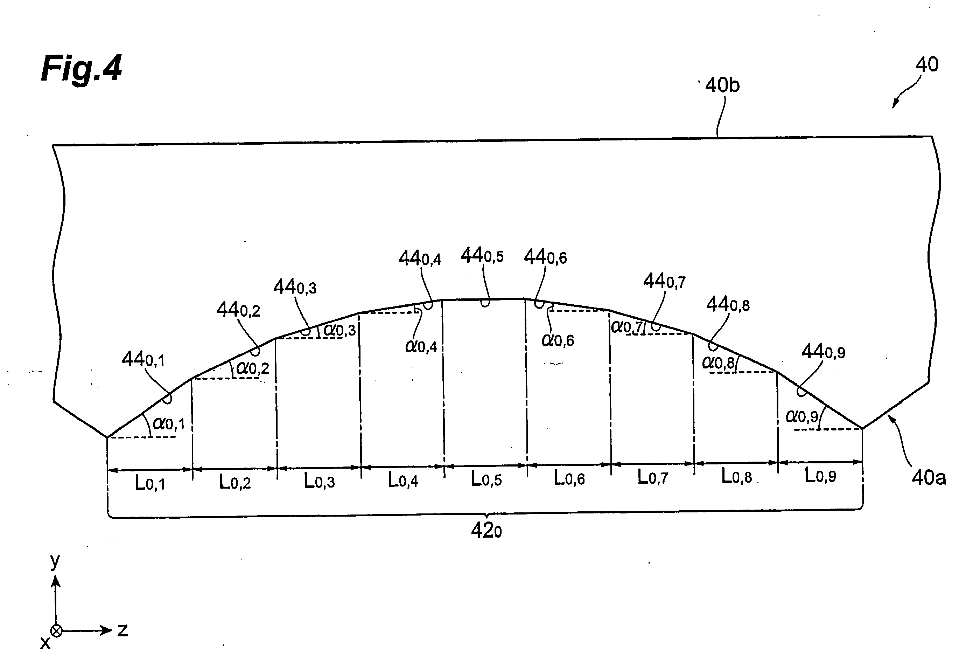

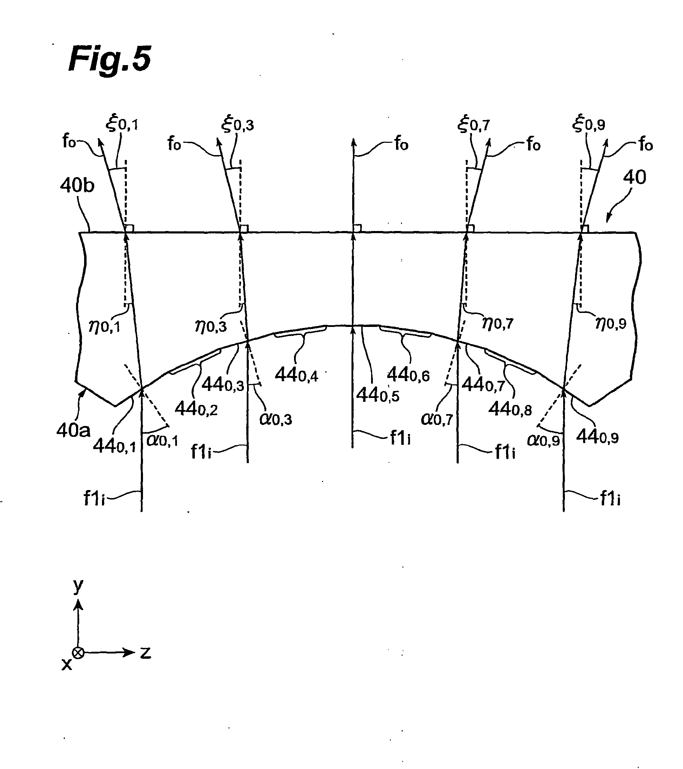

First, the structure of the light path control part $42_0$ will be explained. Figs. 4 and 5 are partly enlarged views of the area directly above the light source in the light control plate. Fig. 5 schematically shows an example of light paths of a plurality of light beams $f1_i$ constituting the first incident light incident on the light path control part $42_0$.

As shown in Figs. 4 and 5, the light path control part $42_0$ is a fine structure extending in the x-axis direction and having a substantially recessed cross-sectional form. The surface of the light path control part $42_0$ is constituted by first to Mth planar parts $44_{0,1}$ to $44_{0,M}$ whose number is M (where M is an integer of 2 or greater). Figs. 4 and 5 illustrate a case where M = 9 by way of example.

The first to Mth planar parts $44_{0,1}$ to $44_{0,M}$, each extending in the x-axis direction, are provided in series. Letting the planar part $44_{0,m}$ (where m is an integer, of at least 1 but not greater than M) be the mth planar part in the first to Mth planar parts $44_{0,1}$ to $44_{0,M}$, the planar part $44_{0,m}$ is parallel to or tilted with respect to a plane parallel to the exit surface 40b. The angle of inclination $\alpha_{0,m}$ of the planar part $44_{0,m}$ with respect to the exit surface 40b is defined such that the light incident on the planar part $44_{0,m}$ is emitted from the exit surface 40b with an output angle $\xi_{0,m}$. The output angle $\xi_{0,m}$ may be any angle within the predetermined angle range (at least $-\xi_{max}$ but not greater than $\xi_{max}$). Preferably, the output angles $\xi_{0,1}$ to $\xi_{0,M}$ cover the whole angle range mentioned above. More preferably, the output angles $\xi_{0,1}$ to $\xi_{0,M}$ are allocated at fixed intervals within the' predetermined angle range mentioned above. The right-handed direction (clockwise direction) with respect to the y-axis direction is referred to as positive direction in the output angle $\xi_{0,m}$.

The sizes of the first to Mth planar parts $44_{0,1}$ to $44_{0,M}$ are defined such that $I(\xi_{0,1})$ to $I(\xi_{0,M})$ which are respective luminances of the light beams $f_0$ emitted to the directions of the output angles $\xi_{0,1}$ to $\xi_{0,M}$ become the same. The size of the planar part $44_{0,m}$ can be determined by defining its pitch ratio $L_{0,m}$, shown in Fig. 4 according to the transmittance of the light control plate 40 with respect to the light beam $f1_i$ incident on the planar part $44_{0,m}$ and the output angle $\xi_{0,m}$ of the light beam $f_0$ corresponding to the light beam $f1_j$.

An example of methods of defining the angles of inclination $\alpha_{0,1}$ to $\alpha_{0,M}$ and the pitch ratios $L_{0,1}$ to $L_{0,M}$ will now be explained. Let n be the refractive index of the light control plate 40, $n_i$ be the refractive index of a medium (e.g., air) in contact with the rear face 40a of the light control plate 40, and $n_o$ be the refractive index of a medium (e.g., air) in contact with the exit surface 40b of the light control plate 40 in the following explanation. Hence, a three-layer structure including the light control plate 40 as its intermediate layer is assumed.

The angle of inclination $\alpha_{0,m}$ of the planar part $44_{0,m}$ can be defined by the following expression (I):

$$\alpha_{0,m} = \sin^{-1}\left[\frac{n}{n_i}\sin\left(\alpha_{0,m} - \eta_{0,m}\right)\right] \qquad (1)$$

where

$$\eta_{0,m} = \sin^{-1}\left(\frac{n_o}{n}\sin\xi_{0,m}\right), \text{ and} \qquad (2)$$

$$\xi_{0,m} = -\xi_{max} + \frac{2\xi_{max}\cdot m}{M}. \qquad (3)$$

As can be understood from expression (2), $\eta_{0,m}$ is the angle of incidence of the light beam $f1_i$ with respect to the exit surface 40b after being refracted upon incidence on the planar part $44_{0,m}$ (see Fig. 5).

The pitch ratio $L_{0,m}$ can be defined by the following expression (4):

$$L_{0,m} = \frac{l_{0,m}}{\sum_{m=1}^{M} l_{0,m}} \qquad (4)$$

where

$$l_{0,m} = \frac{I(\xi_{0,m})\cos\xi_{0,m}}{T_{0,m}}. \qquad (5)$$

In expression (5), $T_{0,m}$ is the transmittance of the light control plate 40 with respect to the light beam $fl_i$ incident on the planar part $44_{0,m}$ and can be represented by the following expression (6) when $T^s_{0,m}$ and $T^p_{0,M}$ are the respective transmittances of the light control plate 40 with respect to the S- and P-polarized components of the light beam $f1_i$ incident on the planar part $44_{0,m}$:

$$T_{0,m} = 0.5(T^s_{0,m} + T^p_{0,m}) \qquad (6)$$

where

$$T^s_{0,m} = \left(t^{1s}_{0,m}\right)^2 \frac{\cos\left(\alpha_{0,m} - \eta_{0,m}\right)}{n_i} \cdot \cos\alpha_{0,m} \cdot \left(t^{2s}_{0,m}\right)^2 n_o \cdot \frac{\cos\xi_{0,m}}{\cos\eta_{0,m}}, \text{ and} \qquad (7)$$

$$T^p_{0,m} = \left(t^{1p}_{0,m}\right)^2 \frac{\cos\left(\alpha_{0,m} - \eta_{0,m}\right)}{n_i} \cdot \cos\alpha_{0,m} \cdot \left(t^{2p}_{0,m}\right)^2 n_o \cdot \frac{\cos\xi_{0,m}}{\cos\eta_{0,m}}. \qquad (8)$$

In expressions (7) and (8), $t^{1s}_{0,m}$ and $t^{1p}_{0,m}$, which are respective transmittances of the planar part $44_{0,m}$ with respect to the Sand P-polarized components of the light beam $f1_i$ at its incidence position, and $t^{2s}_{0,m}$ and $t^{2p}_{0,m}$, which are respective transmittances of the planar part $44_{0,m}$ with respect to the S- and P-polarized components of the light beam $f1_i$ at its exit position on the exit surface 40b, are represented by the following expressions (9) to (12):

$$t^{1s}_{0,m} = 2n_i \frac{\cos\alpha_{0,m}}{n_i \cos\alpha_{0,m} + n\cos\beta_{0,m}} \qquad (9)$$

$$t^{1p}_{0,m} = 2n_i \frac{\cos\alpha_{0,m}}{n\cos\alpha_{0,m} + n_i \cos\beta_{0,m}} \qquad (10)$$

$$t_{0,m}^{2s} = 2n \frac{\cos \eta_{0,m}}{n \cos \eta_{0,m} + n_o \cos \xi_{0,m}} \qquad (11)$$

$$t_{0,m}^{2P} = 2n \frac{\cos \eta_{0,m}}{n_o \cos \eta_{0,m} + n \cos \xi_{0,m}} \qquad (12)$$

When the planar parts $44_{0,1}$ to $44_{0,m}$ are designed by defining the angles of inclination $\alpha_{0,1}$ to $\alpha_{0,M}$ and the pitch ratios $L_{0,1}$ to $L_{0,M}$ by utilizing expressions (1) to (12), the light beams $f1_i$ incident on the planar parts $44_{0,1}$ to $44_{0,M}$ can be emitted from the exit surface 40b with the output angles $\xi_{0,1}$ to $\xi_{0,M}$ defined by expression (3). Therefore, the light path control part $42_0$ having the first to Mth planar parts $44_{0,1}$ to $44_{0,M}$ can expand the incident light $F1_i$ within a predetermined angle range and emit thus widened light from the exit surface 40b. Since the pitch ratios $L_{0,1}$ to $L_{0,M}$ are defined by utilizing expressions (4) and (5), a uniform luminance angle distribution can be attained within the predetermined angle range.

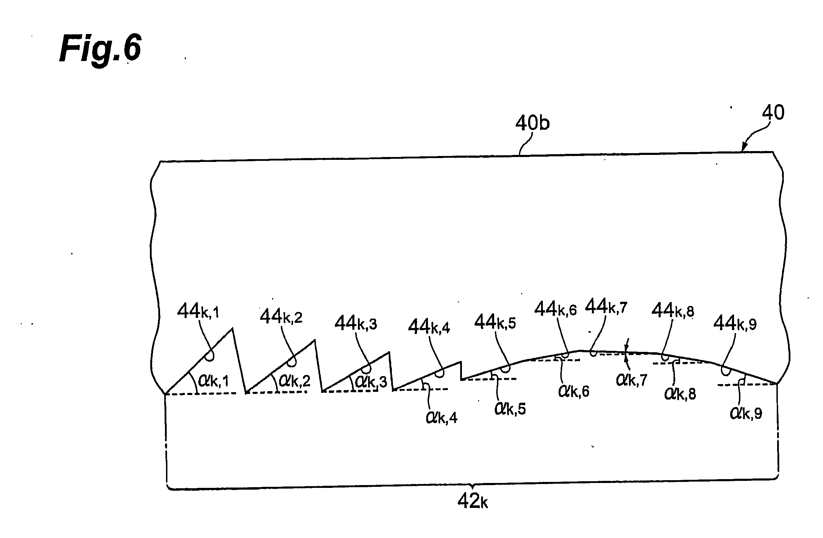

The structure of the light path control part $42_k$ will now be explained. Fig. 6 is an enlarged view of a part including a portion of the first region in the light path control part. Fig. 6 schematically shows the structure of the light control plate including the kth light path control part $42_k$ seen from the light path control part $42_0$. In this embodiment, the light path control part $42_k$ has M planar parts, i.e., first to Mth planar parts $44_{k,1}$ to $44_{k,M}$. Fig. 6 shows a case where M = 9 by way of example.

Each of the first to Mth planar parts $44_{k,1}$ to $44_{k,M}$ extends in the x-axis direction. Letting the planar part $44_{k,m}$ (where m is an integer of at least 1 but not greater than M) be the mth planar part in the first to Mth planar parts $44_{k,1}$ to $44_{k,M}$, the planar part $44_{k,m}$ is parallel to or tilted with respect to a plane parallel to the exit surface 40b. The angle of inclination $\alpha_{k,m}$ of the planar part $44_{k,m}$ with respect to the exit surface 40b is defined such that the light incident on the planar part $44_{k,m}$ is emitted from the exit surface 40b with an output angle $\xi_{k,m}$. The right-handed direction (clockwise direction) in the drawing is referred to as positive direction in the output angle $\xi_{k,m}$ here as well. The output angle $\xi_{k,m}$ may be any angle within the predetermined angle range (at least $-\xi_{max}$ but not greater than $\xi_{max}$). Preferably, the output angles $\xi_{k,1}$ to $\xi_{k,M}$ cover the whole angle range mentioned above. More preferably, the output angles $\xi_{k,1}$ to $\xi_{k,M}$ are allocated at fixed intervals within the predetermined angle range mentioned above.

The size of the planar part $44_{k,m}$ can also be represented by a solid angle ratio of the planar part $44_{k,m}$ seen from the light source 31. This solid angle ratio corresponds to the light beams $f1_i$ entering from the first to Mth planar parts $44_{k,1}$ to $44_{k,M}$, and can be defined such that $I(\xi_{k,1})$ to $I(\xi_{k,M})$ which are respective luminances of the light beams $f_o$ emitted from the exit surface 40b to the directions of the output angles $\xi_{k,1}$ to $\xi_{k,M}$ become the same by utilizing the respective transmittances of the light control plate 40 with respect to the light beams $f1_i$ incident on the first to Mth planar parts $44_{k,1}$ to $44_{k,M}$ and the output angles $\xi_{k,1}$ to $\xi_{k,M}$.

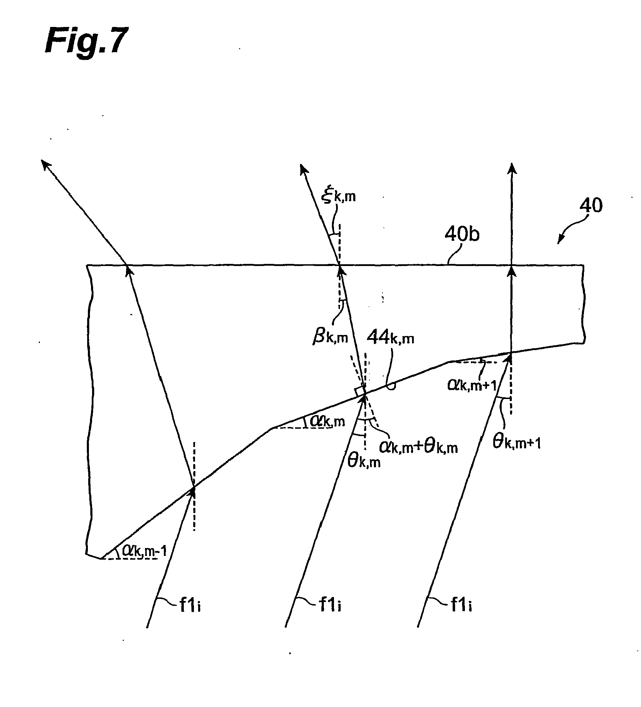

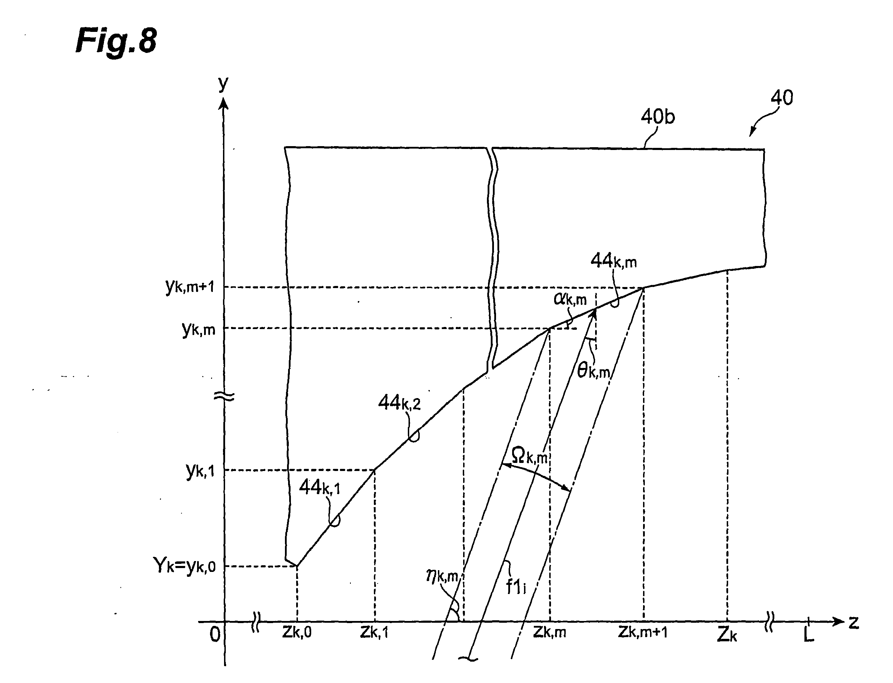

An example of methods of defining the angles of inclination $\alpha_{k,1}$ to $\alpha_{k,M}$ and sizes of the first to Mth planar parts $44_{k,1}$ to $44_{k,M}$ will now be explained. Figs. 7 and 8 are partly enlarged views of a light control plate model for explaining an example of methods of defining the angles of inclination $\alpha_{k,1}$ to $\alpha_{k,M}$ and sizes.

The angle of inclination $\alpha_{k,m}$ of the planar part $44_{k,m}$ can be defined by the following expression (13):

$$n_l \sin(\alpha_{k,m} + \theta_{k,m}) = n \sin(\alpha_{k,m} + \beta_{k,m}) \qquad (13)$$

where $\theta_{k,m}$ is the angle of inclination with respect to the y-axis direction of the light beam $f1_i$ incident on the planar part $44_{k,m}$. Also,

$$\beta_{k,m} = \sin^{-1}\left(\frac{n_o}{n} \sin \xi_{k,m}\right), \text{ and} \qquad (14)$$

$$\xi_{k,m} = -\xi_{\max} + \frac{2\xi_{\max} \cdot m}{M}. \qquad (15)$$

As can be understood from expression (14), $\beta_{k,m}$ is the angle of incidence of the light beam $f1_i$ with respect to the exit surface 40b after being refracted upon incidence on the planar part $44_{k,m}$ (see Fig. 7).

The solid angle ratio $\omega_{k,m}$ of the planar part $44_{k,m}$ seen from the light source 31 can be defined by the following expression (16):

$$\omega_{k,m} = \frac{I(\xi_{k,m})\dfrac{\cos\xi_{k,m}}{T_{k,m}}}{\displaystyle\sum_{m=1}^{M}\left[I(\xi_{k,m})\dfrac{\cos\xi_{k,m}}{T_{k,m}}\right]} \qquad (16)$$

In expression (16), $T_{k,m}$ is the transmittance of the light control plate 40 with respect to the light beam $f1_i$ incident on the planar part $44_{k,m}$ and can be represented by the following expression (17) when $Ts_{k,m}$ and $Tp_{k,m}$ are the respective transmittances of the light control plate 40 with respect to the S- and P-polarized components of the light beam $f1_i$ incident on the planar part $44_{k,m}$:

$$T_{k,m} = 0.5\left(T_{k,m}^{s} + T_{k,m}^{p}\right) \qquad (17)$$

where

$$T_{k,m}^{s} = \left(t_{k,m}^{1s}\right)^{2}\frac{\cos\left(\alpha_{k,m}+\beta_{k,m}\right)}{n_{i}\cos\left(\alpha_{k,m}+\theta_{k,m}\right)}\left(t_{k,m}^{2s}\right)^{2}n_{o}\frac{\cos\xi_{k,m}}{\cos\beta_{k,m}}, \text{ and} \qquad (18)$$

$$T_{k,m}^{p} = \left(t_{k,m}^{1p}\right)^{2}\frac{\cos\left(\alpha_{k,m}+\beta_{k,m}\right)}{n_{i}\cos\left(\alpha_{k,m}+\theta_{k,m}\right)}\left(t_{k,m}^{2p}\right)^{2}n_{o}\frac{\cos\xi_{k,m}}{\cos\beta_{k,m}}. \qquad (19)$$

In expressions (18) and (19), $t1s_{k,m}$ and $t1p_{k,m}$, which are respective transmittances of the planar part $44_{k,m}$ with respect to the Sand P-polarized components of the light beam $f1_i$ at its incidence position, and $t2s_{k,m}$ and $t2p_{k,m}$, which are respective transmittances of the exit surface 40b with respect to the S- and P-polarized components of the light beam $f1_i$ at its exit position, are represented by the following expressions (20) to (23):

$$t_{k,m}^{1s} = \frac{2n_{i}\cos\left(\alpha_{k,m}+\theta_{k,m}\right)}{n_{i}\cos\left(\alpha_{k,m}+\theta_{k,m}\right)+n\cos\left(\alpha_{k,m}+\beta_{k,m}\right)} \qquad (20)$$

$$t_{k,m}^{1p} = \frac{2n_{i}\cos\left(\alpha_{k,m}+\theta_{k,m}\right)}{n\cos\left(\alpha_{k,m}+\theta_{k,m}\right)+n_{i}\cos\left(\alpha_{k,m}+\beta_{k,m}\right)} \qquad (21)$$

$$t_{k,m}^{2s} = 2n\frac{\cos\beta_{k,m}}{n\cos\beta_{k,m} + n_o\cos\xi_{k,m}} \qquad (22)$$

$$t_{k,m}^{2p} = 2n\frac{\cos\beta_{k,m}}{n_o\cos\beta_{k,m} + n\cos\xi_{k,m}} \qquad (23)$$

For designing the planar part $44_{k,m}$, it will be sufficient if positions of both ends of the planar part $44_{k,m}$ are determined by using the angle of inclination $\alpha_{k,m}$ and solid angle ratio $\omega_{k,m}$ calculated by utilizing expressions (13) to (15) and (16) to (23). A method of determining the positions of both ends will now be explained.

As shown in Fig. 8, let $Z_k$ be the z-coordinate at the center of the light path control part $42_k$, and $z_{k,0}$ be the z-coordinate at the end on the origin O side (i.e., directly above the light source 31) of the light path control part $42_k$. Here, $z_{k,0}$ is represented by $(Z_k+Z_{k-1})/2$. Letting $z_{k,m}$ and $y_{k,m}$ be the z- and y-coordinates of the end of the planar part $44_{k,m}$ on the light source 31 side, respectively, $z_{k,m+1}$ and $y_{k,m+1}$ which are z- and y-coordinates of the planar part $44_{k,m}$ on the light source 32 side (z = L side) are represented by the following expressions (24) and (25):

$$z_{k,m+1} = \frac{-z_{k,m}\tan\alpha_{k,m} + y_{k,m} + H}{\tan(\eta_{k,m} - \Omega_{k,m}) - \tan\alpha_{k,m}} \qquad (24)$$

$$y_{k,m+1} = \frac{-z_{k,m}\tan\alpha_{k,m}\tan(\eta_{k,m} - \Omega_{k,m}) + H\tan\alpha_{k,m}}{\tan(\eta_{k,m} - \Omega_{k,m}) - \tan\alpha_{k,m}} \qquad (25)$$

In expressions (24) and (25), H is the distance between the center of the light source 31 and the origin O, i.e., the distance from the center of the light source 31 to the rear face 40a when no fine structures such as light path control part $42_{k,m}$ are supposed to be formed.

In expression (25), $\eta_{k,m}$ is the angle formed by the line connecting the center of the light source 31 and the end of the planar part $44_{k,m}$ on the origin O side and the z-axis direction.

$\Omega_{k,m}$ is a solid angle of the light path control part $42_{k,m}$ seen from the light source 31, and is represented by the following expression (26):

$$\Omega_{k,m} = \omega_{k,m}\left[\tan^{-1}\left(\frac{Z_{k-1} + Z_k}{Y_{k-1} + Y_k + 2H}\right) - \tan^{-1}\left(\frac{Z_k + Z_{k+1}}{Y_k + Y_{k+1} + 2H}\right)\right] \qquad (26)$$

In expression (26), $Y_k$ is the y-coordinate of the end of the kth light path control part $42_k$ on the origin O side, i.e., the end positioned where $z = Z_{k,0}$.

For designing the light path control part $42_k$, it will be sufficient if the angle of inclination $\alpha_{k,m}$ and solid angle ratio $\omega_{k,m}$ of the mth planar part $44_{k,m}$ in the light path control part $42_k$ are determined according to expressions (13) to (26).

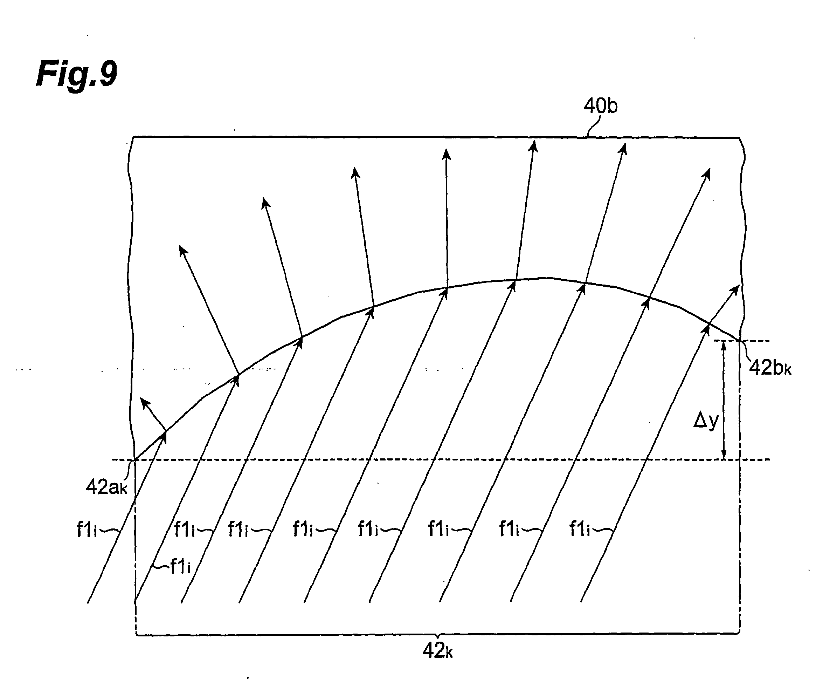

Meanwhile, when thus determined first to Mth planar parts $44_{k,1}$ to $44_{k,M}$ are arranged in series as in the light path control part $42_0$, for example, the positions of both ends $42a_k$, $42b_k$ in the light path control part $42_k$ may shift from each other in the y-axis direction as shown in Fig. 9. Therefore, the y-coordinate of the end of the kth light path control part $42_k$ on the origin O side is generalized as $Y_k$ in expression (26). When a plurality of light path control parts whose both ends $42a_k$, $42b_k$ shift from each other in the y-axis direction as such are connected together, steps at both ends of the light path control parts accumulate, thereby thickening the light control plate, thus failing to make a flat sheet-like light control plate.

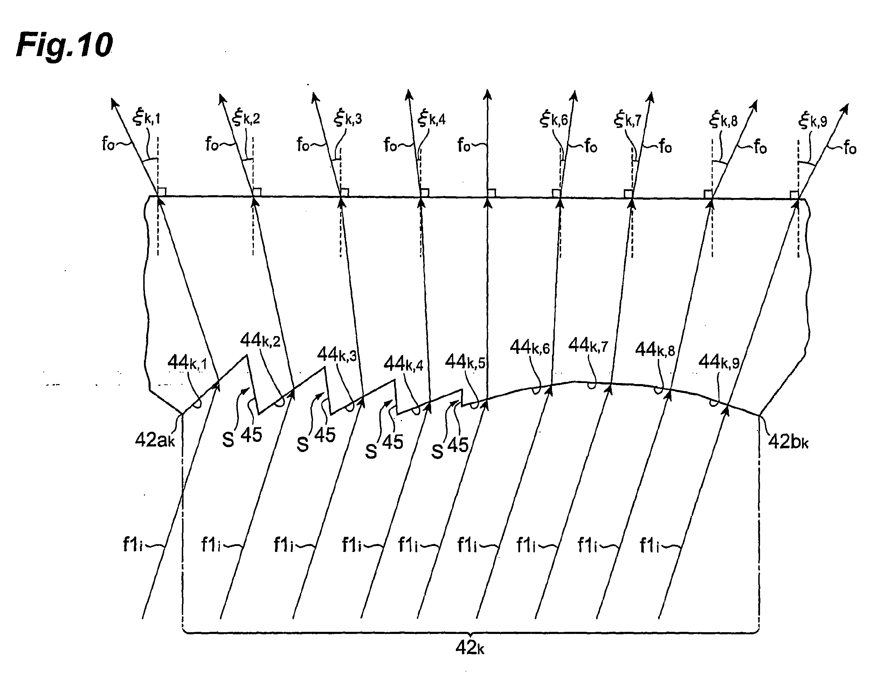

Therefore, as shown in Fig. 10, a step S is provided between two adjacent planar parts (planar parts $41_{k,m}$, $44_{k,m+1}$ in Fig. 10) on one side (left side in Fig. 10) of both ends $42a_k$, $42b_k$ of the light path control part $42_k$ such that both ends $42a_k$, $42b_k$ have the same y-coordinate. In Fig. 10, the step S is provided between each pair of adjacent planar parts in the planar parts $44_{k,1}$ to $44_{k,5}$. Preferably, a slope 45 is formed by providing the step S such that the light refracted by one of the two planar parts forming the slope 45 is not inhibited by the slope 45 from advancing. Specifically, with reference to the planar parts $44_{k,1}$, $44_{k,2}$ in Fig. 10 by way of example, it will be preferred if the slope 45 connecting the planar parts $44_{k,1}$, $44_{k,2}$ is formed substantially parallel to the advancing direction (refracting direction) of the light beam $f1_i$ refracted by the planar part $44_{k,2}$. This restrains the step S from further refracting the light beam $f1_i$, whereby the light beam $f_o$ can be emitted from the exit surface 40b with a desirable output angle defined by expression (15). The steps S may be arranged on the right side of Fig. 10 in the light path control part $42_k$ instead of the left side illustrated here.

For thus providing the steps S, the planar part $44_{k,m}$ may be designed while assuming that $Y_k$, which is the y-coordinate of the end $42a_k$ on the origin O side of each light path control part $42_k$, is 0 in the designing of the light path control part $42_k$. Also, once the step S is designed and provided while generalizing that the y-coordinate of the end $42a_k$ is $Y_k$ as mentioned above, the angle of inclination $\alpha_{k,m}$ and size of each planar part $44_{k,m}$ may be rearranged by a similar technique, i.e., using Snell's low, such that the light $f1_i$ incident on each planar part $44_{k,m}$ is emitted from the exit surface 40b with a desirable output angle.

Though providing the step S partly reduces the size of the planar part $44_{k,m}$, the light path control part $42_k$ is a structure which is typically much smaller than the distance H between the light source 31 and light control plate 40 and thus hardly affects the luminance angle distribution. When such a stop S is provided, the light path control part $42_k$ is constructed by a polygonal lens part in which the planar parts $44_{k,m}$ are connected in series, and a prism area part having at least one prism part including the planar part $44_{k,m}$ and slope 45 as side faces.

When the angles of inclination $\alpha_{k,1}$ to $\alpha_{k,M}$ and sizes of the first to Mth planar parts $44_{k,1}$ to $44_{k,M}$ are defined by utilizing expressions (13) to (26) as mentioned above, the light beams $f1_i$ incident on the first to Mth planar parts $44_{k,1}$ to $44_{k,M}$ can be emitted from the exit surface 40b with output angles defined by expression (15) as shown in Fig. 10. As a result, the light $F1_i$ incident on the light path control part $42_k$ can be emitted as being widened within the predetermined angle range. Since the sizes (solid angle ratios) of the first to Mth planar parts $44_{k,1}$ to $44_{k,M}$ are defined by utilizing expressions (16) to (26), the light $F1_i$ incident on the light path control part $42_k$ can be emitted as light having a uniform luminance angle distribution within the predetermined angle range.

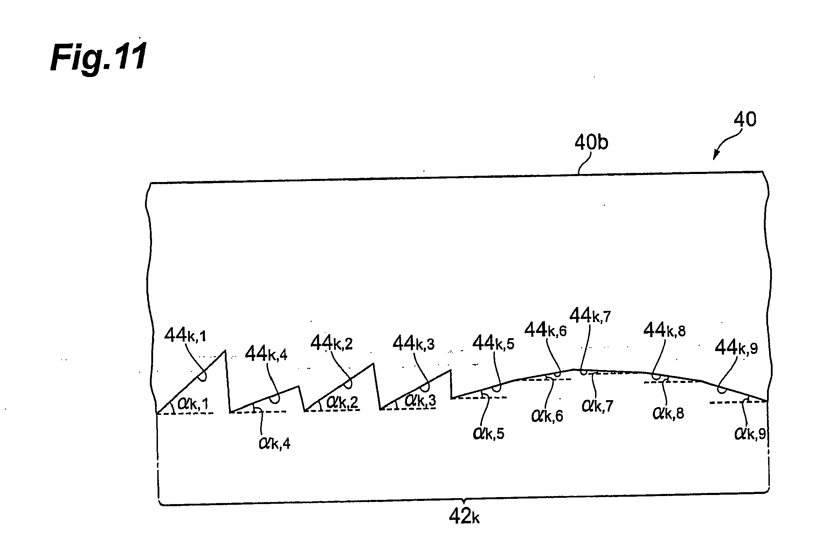

When a portion of the light path control part $42_k$ is provided with the step S as shown in Fig. 10, so as to form the slope 45, thus formed slope 45 makes the planar part $44_{k,m}$ smaller than designed, whereby the emission efficiency may decrease. Therefore, the first to Mth planar parts $44_{k,1}$ to $44_{k,M}$ designed by utilizing expressions (13) to (26) may be partly rearranged as shown in Fig. 11 so as to maximize the emission efficiency, i.e., make the slope 45 smaller.

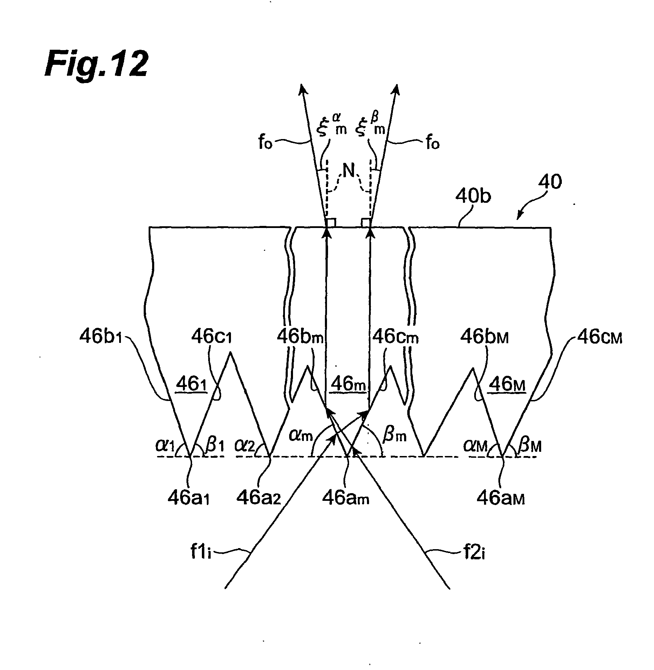

The light path control part 43 in the second region 41 B will now be explained. Fig. 12 is a schematic view of an example of the light path control part in the second region. Fig. 12 partly enlarges a portion of the light control plate 40 including the light path control part 43.

The light path control part 43 has first to Mth prism parts $46_1$ to $46_M$ each extending in the x-axis direction and having a substantially triangular cross-sectional form. As shown in Fig. 12, the first to Mth prism parts $46_1$ to $46_M$ are projected downward and are formed such that their prism apexes $46a_1$ to $46a_M$ are positioned on the same plane. The structure of the mth prism part $46_m$ (where m is an integer of at least 1 but not greater than M) in the first to Mth prism parts $46_1$ to $46_M$ will now be explained.

The prism part $46_m$ has two intersecting side faces (tilted surfaces) $46b_m$, $46c_m$. The side face (tilted surface) $46b_m$, $46c_m$ receives light from one of the two light sources 31, 32 that is closer thereto.

The prism, part $46_m$ is constructed such that the light beam $f1_i$ from the light source 31 on the side face $46b_m$ side is refracted toward the side face $46c_m$ by the side face $46b_m$ and then totally reflected by the side face $46c_m$, so as to be emitted from the exit surface 40b with an output angle $\xi^\beta_m$, while the light beam $f2_i$ from the light source 32 on the side face $46c_m$ side is refracted toward the side face $46b_m$ by the side face $46c_m$ and then totally reflected by the side face $46b_m$, so as to be emitted, from the exit surface 40b with an output angle $\xi^\alpha_m$. The right-handed direction (clockwise direction) in the drawing is referred to as positive direction in the output angles $\xi^\alpha_m$, $\xi^\beta_m$.

The output angles $\xi^\alpha_m$, $\xi^\beta_m$ are values within a predetermined angle range (at least $-\xi_{max}$ but not greater than $\xi_{max}$) and preferably cover the whole predetermined angle range. It will be preferred if the output angles $\xi^\alpha_1$ to $\xi^\alpha_M$ are allocated at fixed intervals within the predetermined angle range mentioned above. Similarly, it will be preferred if the output angles $\xi^\beta_1$ to $\xi^\beta_M$ are allocated at fixed intervals within the predetermined angle range mentioned above.

The output angles $\xi^\alpha_m$, $\xi^\beta_m$ of light incident on the prism part $46_m$ are determined by defining the respective angles of inclination $\alpha_m$, $\beta_m$ of the side faces $46b_m$, $46c_m$ with respect to a plane parallel to the exit surface 40b, while the form of the prism part $46_m$ is determined by defining the angles of inclination $\alpha_m$, $\beta_m$.

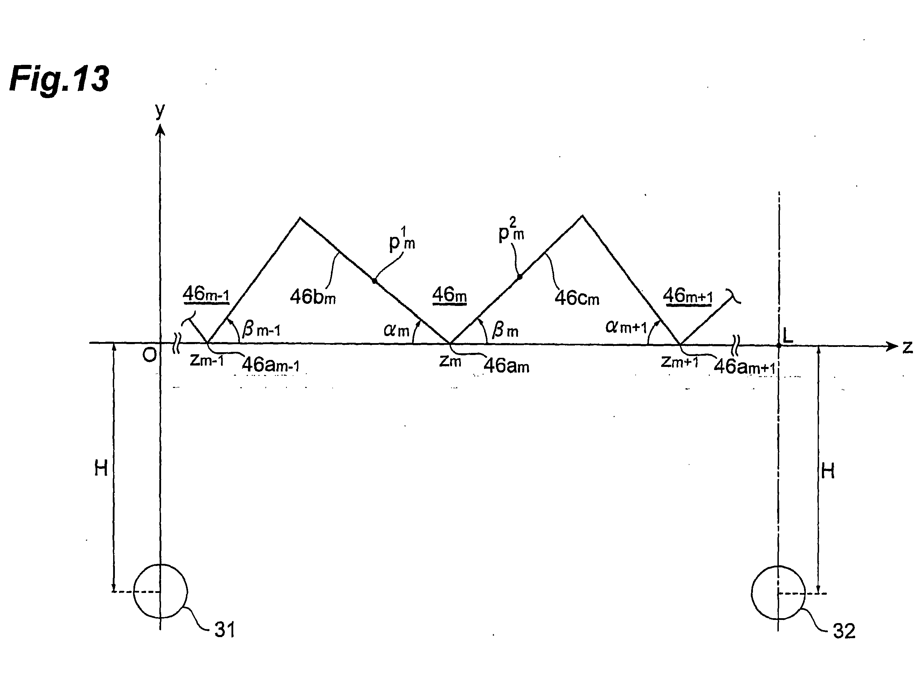

An example of methods of defining the angles of inclination $\alpha_m$, $\beta_m$ will be explained with reference to Figs. 13 to 15.

Fig. 13 is a view showing a light control plate model for explaining a method of defining the angles of inclination

$\alpha_m$, $\beta_m$. The three-dimensional coordinate system shown in Fig. 13 is the same as that shown in Fig. 3. As shown in Fig. 13, the right-handed direction is the positive direction of the angle of inclination $\alpha_m$, while the left-handed direction is the positive direction of the angle of inclination $\beta_m$.

The respective positions at which the light beams $f1_i$, $f2_i$ from the light sources 31, 32 are totally reflected are assumed to be midpoints $p1_m$, $p2_m$ of the tilted surfaces $46b_m$, $46c_m$ of the prism part $46_m$. Letting $(z1_m, y1_m)$ and $(z2_m, y2_m)$ be the coordinates of the points $p1_m$ and $p2_m$, these points are represented by the following expressions (27) and (28), respectively:

$$\left(z_m^1, y_m^1\right) = \left(\frac{1}{2}\frac{\left(z_{m-1}+z_m\right)\tan\beta_{m-1}+2z_m\tan\alpha_m}{\tan\beta_{m-1}+\tan\alpha_m}, \frac{1}{2}\frac{\left(z_m-z_{m-1}\right)\tan\beta_{m-1}\tan\alpha_m}{\tan\beta_{m-1}+\tan\alpha_m}\right) \quad (27)$$

$$\left(z_m^2, y_m^2\right) = \left(\frac{1}{2}\frac{2z_m\tan\beta_m+\left(z_m+z_{m+1}\right)\tan\alpha_{m+1}}{\tan\beta_m+\tan\alpha_{m+1}}, \frac{1}{2}\frac{\left(z_{m+1}-z_m\right)\tan\beta_m\tan\alpha_{m+1}}{\tan\beta_m+\tan\alpha_{m+1}}\right) \quad (28)$$

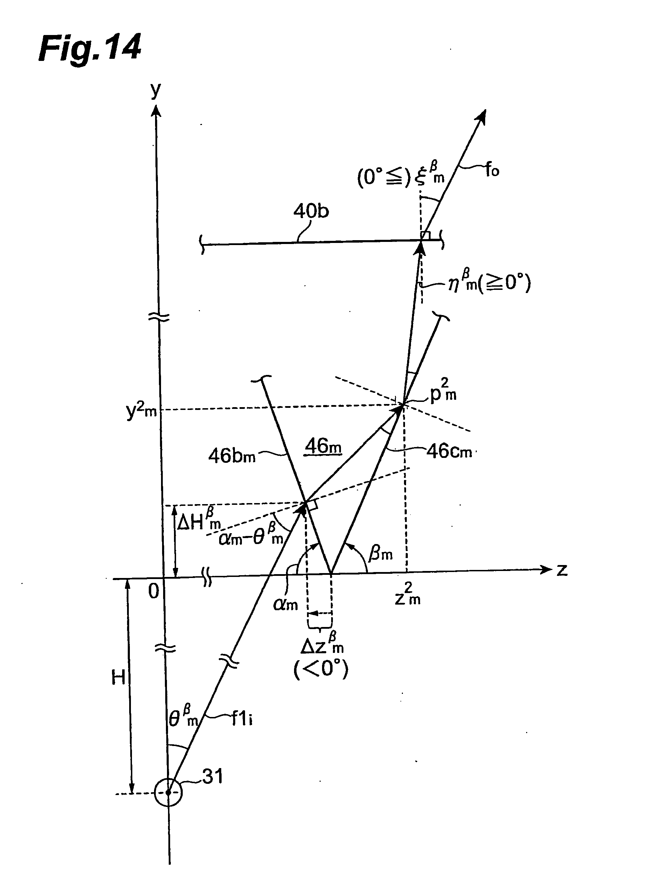

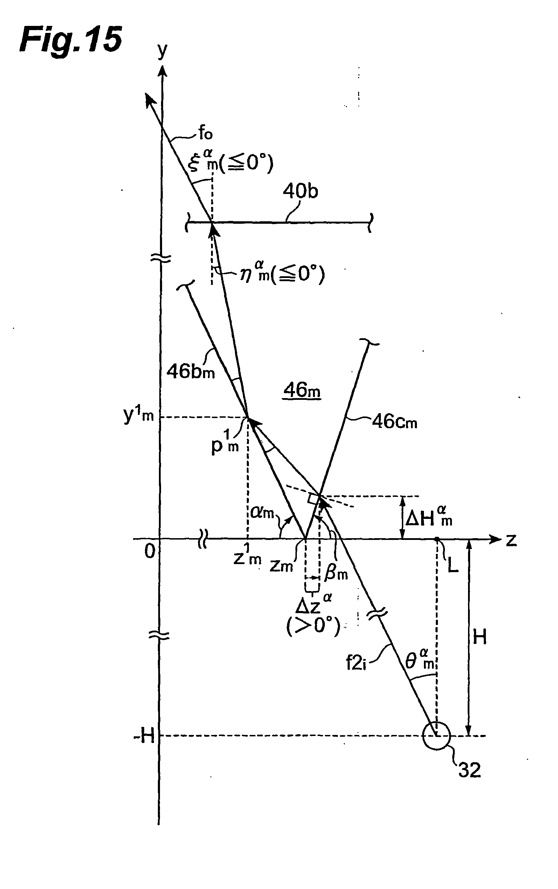

Figs. 14 and 15 are views for explaining the method of defining angles of inclination $\alpha_m$, $\beta_m$ of two side faces in the prism part. Figs. 14 and 15 schematically show the prism part $46_m$ and illustrate the exit surface 40b and light sources 31, 32 for explanation.

When the light beam $f1_i$ incident on the side face $46b_m$ is emitted from the exit surface 40b with the output angle $\xi^\beta_m$ after being totally reflected by the side face $46c_m$ as shown in Fig. 14, the angles of inclination $\alpha_m$, $\beta_m$ satisfy the following expressions (29) and (30):

$$n_o \sin\xi^\beta_m = n\cdot\sin\eta^\beta_m \quad (29)$$

$$n_i \sin\left(\alpha_m-\theta^\beta_m\right) = n\sin\left(\alpha_m+2\beta_m+\eta^\beta_m-\pi\right) \quad (30)$$

In expression (30), $\theta^3_m$ is the angle between the y-axis direction and the light beam $f1_i$ incident on the side face $46b_m$ as shown in Fig. 14 after being outputted from the light source 31 and satisfies the relationship of expression (31):

$$\tan\theta^\beta_m = \frac{z_m+\Delta z^\beta_m}{H+\Delta H^\beta_m} \quad (31)$$

Here,

$$\Delta H^\beta_m = -\Delta z^\beta_m \tan\alpha_m, \text{ and} \quad (32)$$

$$\Delta z_m^\beta = -\frac{\left(z_m - z_m^2\right)\tan\left(2\beta_m - 0.5\pi + \eta_m^\beta\right) + y_m^2}{\tan\alpha_m + \tan\left(2\beta_m - 0.5\pi + \eta_m^\beta\right)}. \qquad (33)$$

$\Delta H^\beta_m$ and $\Delta z^\beta_m$ represented by expressions (32) and (33) are correction terms by which the deviation between the position at which the light beam $f1_i$ is incident on the prism part $46_m$ by totally reflecting the light beam $f1_i$ at the position of the point $p^2_m$ as shown in Fig. 14 and the position of the prism apex $46a_m$ is corrected with respect to the z- and y-axis directions.

In expression (30), $\eta^\beta_m$ is the angle by which the light totally reflected by the side face $46c_m$ is incident on the exit surface 40b as shown in Fig. 14, and $\eta^\beta_m \geq 0$ in the incident direction of Fig. 14.

When the light beam $f2_i$ incident on the side face $46c_m$ is emitted from the exit surface 40b with the output angle $\xi^\alpha_m$ after being totally reflected by the side face $46b_m$ at the position of the point $p^1_m$ as shown in Fig. 14, the angles of inclination $\alpha_m$, $\beta_m$ satisfy the following expressions (34) and (35):

$$n_o \sin\xi_m^\alpha = n\sin\eta_m^\alpha \qquad (34)$$

$$n_i \sin\left(\beta_m - \theta_m^\alpha\right) = n\sin\left(2\alpha_m + \beta_m + \eta_m^\alpha - \pi\right) \qquad (35)$$

In expression (35), $\theta^\alpha_m$ is the angle between the y-axis direction and the light beam $f2_i$ incident on the side face $46a_m$ as shown in Fig. 15 after being outputted from the light source 32 and satisfies the relationship of expression (36):

$$\tan\theta_m^\alpha = \frac{L - z_m - \Delta z_m^\alpha}{H + \Delta H_m^\alpha} \qquad (36)$$

Here,

$$\Delta H_m^\alpha = \Delta z_m^\alpha \tan\beta_m, \text{ and} \qquad (37)$$

$$\Delta z_m^\alpha = \frac{\left(z_m^1 - z_m\right)\tan\left(2\alpha_m - 0.5\pi - \eta_m^\alpha\right) + y_m^1}{\tan\beta_m + \tan\left(2\alpha_m - 0.5\pi - \eta_m^\alpha\right)}. \qquad (38)$$

$\Delta z^\alpha_m$ and $\Delta H^\alpha_m$ represented by expressions (37) and (38) are correction terms by which the deviation between the position at which the light beam $f2_i$ is incident on the prism part $46_m$ by totally reflecting the light beam $f2_i$ at the position of the point $p^1_m$ as shown in Fig. 15 and the position of the prism apex $46a_m$ is corrected with respect to the z- and y-axis directions.

Since the changing of light paths of the light beams $f1_i$, $f2_i$ by the prism part $46_m$ in the light path control part 43 can be realized by the combination of the cases shown in Figs. 14 and 15, it will be sufficient if the angles of inclination $\alpha_m$, $\beta_m$ with respect to the prism part $46_m$ are defined such as to satisfy expressions (29) to (33) and (34) to (38) at the same time.

When the light beams $f1_i$, $f2_i$ are incident on the prism parts $46_1$ to $46_M$ whose forms are thus defined by the angles of inclination $\alpha_1$ to $\alpha_M$, $\beta_1$ to $\beta_M$, the light beams $f_o$ corresponding to the incident light beams $f1_i$, $f2_i$ are emitted

from the exit surface 40b with output angles $\xi^\alpha_1$ to $\xi^\alpha_M$, $\xi^\beta_1$ to $\xi^\beta_M$. Therefore, the light path control part 43 can widen the incident light components F1, F2 within the predetermined angle range and emit thus widened light components.

As mentioned above, the structure of the corresponding area 41 on the light source 32 side of the plane P shown in Fig. 2, i.e., the structure of the second region 41B from the position of the plane P to the third region 41C and the third region 41C, corresponds to the reverse about the plane P of the structure of the first region 41A and the second region 4 1 B from the first region 41A to the plane P. Therefore, designing the structure of the first region 41A and the second region 41B from the first region 41A to the plane P can design the structure of the rear face 40a of the light control plate 40. Preferably, the boundary position between the first and second regions 41A, 41B and the boundary position between the second and third regions 41B, 41C are determined such that local luminance angle distributions of light components emitted from the exit surface 40b are connected as smoothly as possible to each other.

First, when making the light control plate 40, the structures of light path control parts $42_0$, $42_k$, 43 to be formed in the corresponding area 41 are designed by utilizing expressions (1) to (12), (13) to (26), and (27) to (38) as mentioned above. The steps S are provided as appropriate when designing the structures of the light path control part $42_k$. Subsequently, a planar body made of a transparent material having flat front and rear faces is prepared, and its rear face is cut at predetermined positions by a microfabrication technique, so as to form the light path control parts $42_0$, $42_k$, 43 designed as mentioned above, thereby yielding the light control plate 40. The light path control parts $42_0$, $42_k$, 43 are formed such that the rear face of the planar body corresponds to the xz plane shown in Fig. 3. As a consequence, both ends of the light path control parts $42_0$, $42_k$ and the prism apexes $46a_1$ to $46a_M$ of the prism parts $46_1$ to $46_M$ in the light path control part 43 are formed on the same plane.

In the surface light source device 50 using the light control plate 40 having the structure mentioned above, the light components F1, F2 outputted from the two light sources 31, 32 adjacent to each other in a plurality of light sources 30 are incident on the light control plate 40 from the rear face 40a of the light control plate 40. The light path control parts $42_0$, $42_k$, 43 are formed in the first to third regions 41A to 41C of each corresponding area 41 in the rear face 40a of the light control plate 40, respectively.

Of the light $F1_i$ outputted from the light source 31 closer to the first region 41A in the two light sources 31, 32, parts incident on the light path control parts $42_0$, $42_k$ formed in the first region 41A are emitted from the exit surface 40b as being widened within the predetermined angle range by the light path control parts $42_0$, $42_k$. Of the light components $F1_i$, $F2_i$ outputted from the two light sources 31, 32, the part incident on the light path control part 43 formed in the second region 41B is emitted from the exit surface 40b as being widened within the predetermined angle range by the light path control part 43. Of the light $F2_i$ outputted from the light source 32 closer to the third region 41C in the two light sources 31, 32, parts incident on the light path control parts $42_0$, $42_k$ formed in the third region 41C are emitted from the exit surface 40b as being widened within the predetermined angle range by the light path control parts $42_0$, $42_k$.

Therefore, the respective incident light components through the light path control parts $42_0$, $42_k$, 43 are emitted from the exit surface 40b as being widened within the predetermined angle range in each emission region therefor. As a result, the emission light $F_o$ widened within the predetermined angle range is emitted from the exit surface 40b.

It is also important for the light, control plate 40 to form the light path control parts $42_0$, $42_k$ in the first and third regions 41A, 41C and form the light path control part 43 in the second region 41B held between the first and third regions 41A, 41C.

As mentioned above, the first and third regions 41A, 41C in the rear face 40a of the light control plate 40 mainly receive light from the light sources 30 closer to them. In this case, the inclination of the incident light with respect to the y-axis direction is so small that the light can be emitted as being widened into the predetermined angle range by utilizing the refraction of light upon incidence on the first to Mth planar parts $44_{0,1}$ to $44_{0,M}$, $44_{k,1}$ to $44_{k,M}$. On the other hand, the light incident on the second region 41B tends to tilt greater with respect to the y-axis direction. Though this makes it difficult to control the output angle with a single refraction process by the planar part as in the first and third regions 41A, 41C, for example, the light can be widened into the predetermined angle range more reliably by utilizing the total reflection within the prism parts $46_1$ to $46_M$. Hence, forming the light path control parts $42_0$, $42_k$ in the first and third regions 41A, 41C and forming the light path control part 43 in the second region 41B as in the light control plate 40 can widen the light components $F1_i$, $F2_i$ incident on the light control plate 40 into the predetermined angle range and emit thus widened light as mentioned above.

In the transmission type image display apparatus 1 constructed such that the light $F_o$ from the surface light source device 50 is incident on the transmission type image display part 10 as shown in Fig. 1, the light $F_o$ widened into the predetermined angle range is incident on the transmission type image display part 10. Hence, a viewing angle corresponding to the predetermined angle range can be secured.

Though a plurality of light sources 30 emit light in various directions, light components from the plurality of light sources 30 are converged into the predetermined angle range by utilizing the above-mentioned light control plate 40. As a result, the luminance of the light $F_o$ emitted from the light control plate 40 can be made higher within the predetermined angle range. Further, the direction of refraction of incident light is adjusted in the light path control parts $42_0$, $42_k$ such that a fixed luminance angle distribution is attained within the predetermined angle range, whereby the luminance angle distribution is likely to become uniform in the emission light $F_o$. Therefore, employing the surface light source device 50 in the transmission type image display apparatus 1 reduces unevenness in pictures and the like and easily adapts it to larger sizes in the transmission type image display apparatus 1 and the like.

Design examples of the light control plate 40 and results of a simulation using the design examples will now be explained as examples.

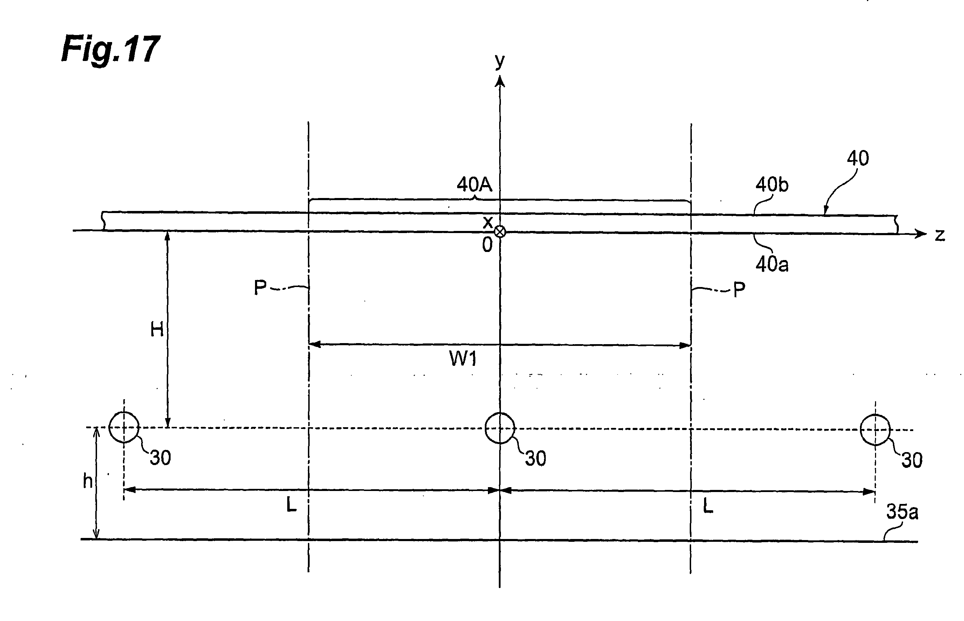

Fig. 17 is a schematic view of a simulation model including the light control plate. The simulation model is constructed by a plurality of light sources 30 aligned at equally-spaced intervals L in the z-axis direction, a light control plate 40 arranged separated by a distance H from the light sources 30, and a light reflecting surface 35a corresponding to the inner face 35a of the light box shown in Fig. 1. Each light source 30 is supposed to be one shaped like a rod having a radius of 1 mm, while the distance (center-to-center distance) L between the adjacent light sources 30 is 30 mm. The distance H between the light control plate 40 and the light sources 30 is 20 mm. The distance H corresponds to the distance between the center of each light source 30 and the main face 40a in the light control plate 40 having no light path control parts 42, 43, and is specifically the distance between a plane including the centers of a plurality of light sources 30 and a plane including a plurality of prism apexes $46a_m$. The thickness of the light control plate 40 is 2 mm. The light control plate 40 is placed in air and has a refractive index of 1.57277. The distance h between the light reflecting surface 35a and the centers of the light sources 30 is 5 mm.

In this simulation, a region having a width W1 in the z-axis direction centered at a position (origin position in the drawing) directly above each light source 30 in the light control plate 40 is defined as one unit (hereinafter referred to as light control unit) 40A, and the light control plate 40 is supposed to be constructed by connecting the respective light control units 40A corresponding to the light sources 30 in the z-axis direction. The light control unit 40A corresponds to an area between planes P which include the center positions in the z-axis direction of corresponding areas 41 adjacent to each other in the light control plate 40 and are parallel to the xy plane shown in Fig. 17. The width W1 is 30 mm in this simulation. The rear face 40a of the light control unit 40A is formed with light path control parts $42_0$, $42_k$, 43, each having a width of 1.0 mm in the z-axis direction, which are designed by utilizing expressions (1) to (38)

When utilizing expressions (1) to (38) in the designing of the light path control parts $42_0$, $42_k$, 43 in the light control unit 40A, M was 9 in each of the light path control parts $42_0$, $42_k$, 43, the maximum output angle $\xi_{max}$ was 20°, and the width of each of the light path control parts $42_0$, $42_k$, 43 in the z-axis direction was 1.0 mm. From the arrangement of the light control plate 40 with respect to the light source 30 and the like mentioned above, H = 20 mm, $n_i = n_o = 1$, and n = 1.57277. The luminance $I(\xi)$ used when defining the structures of the light path control parts $42_0$, $42_k$ by utilizing expressions (1) to (26) was 1 within the range of $-\xi_{max} \leq \xi \leq \xi_{max}$. Though one light source 30 corresponds to one light control unit 40A, the structure of the rear face in the light control unit 40A is designed while also taking account of light from the light source 30 corresponding to the light control unit 40A adjacent to the one to be designed as can be understood from the explanation concerning expressions (1) to (3 8). The structure of the rear face 40a in the light control unit 40A will now be explained specifically.

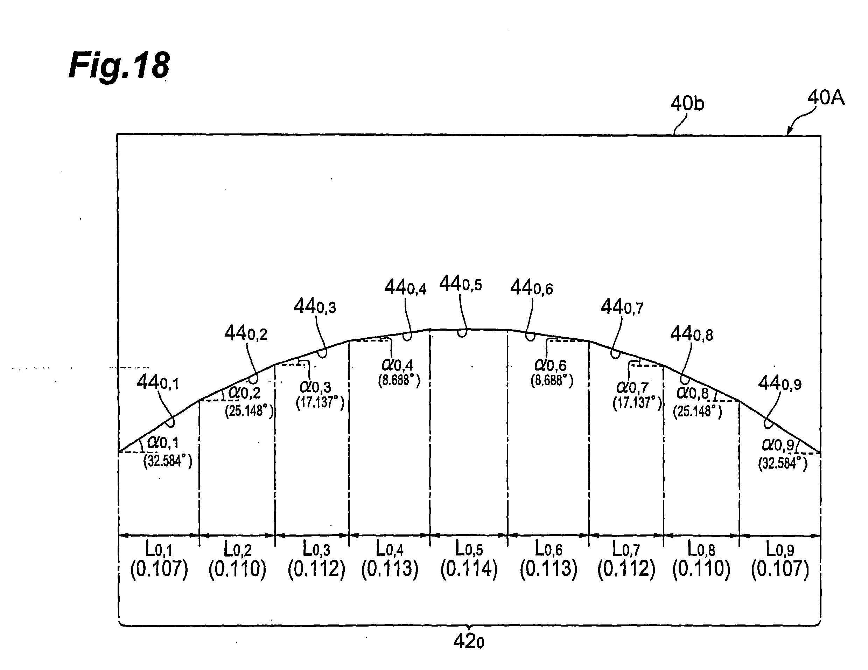

Fig. 18 is a chart showing an area where $-0.5 \leq z \leq 0.5$ in the light control unit and illustrating the light path control part $42_0$. The light path control part $42_0$ is designed by using expressions (1) to (12). The angles of inclination $\alpha_{0,1}$ to $\alpha_{0,9}$ and pitch ratios $L_{0,1}$ to $L_{0,9}$ are as shown in Table 1. Since the width of the light path control part $42_0$ is 1.0 mm, the pitch ratios correspond to the respective lengths of the planar parts in the z-axis direction. Therefore, Table 1 employs (mm) as the unit for pitch ratio $L_{0,m}$.

**[TABLE 1]**

| m | $\alpha_{0,\mu}$ (°) | $L_{0,m}$ (mm) |
|---|---|---|
| 1 | 32. 584 | 0. 107 |
| 2 | 25. 148 | 0. 110 |
| 3 | 17. 137 | 0. 112 |
| 4 | 8. 688 | 0. 113 |
| 5 | 0. 000 | 0. 114 |
| 6 | 8. 688 | 0. 113 |
| 7 | 17. 137 | 0. 112 |
| 8 | 25. 148 | 0. 110 |
| 9 | 32. 584 | 0. 107 |

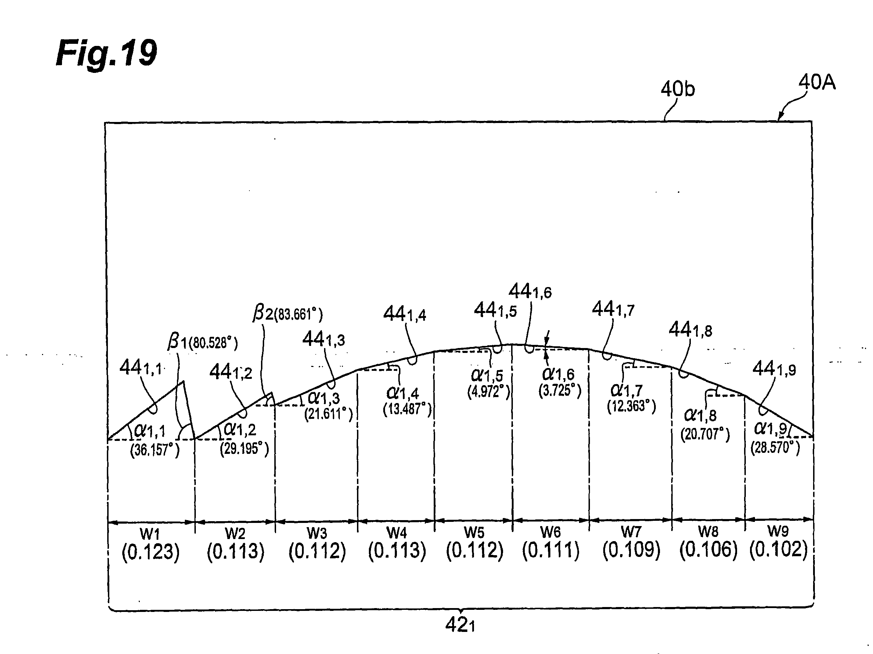

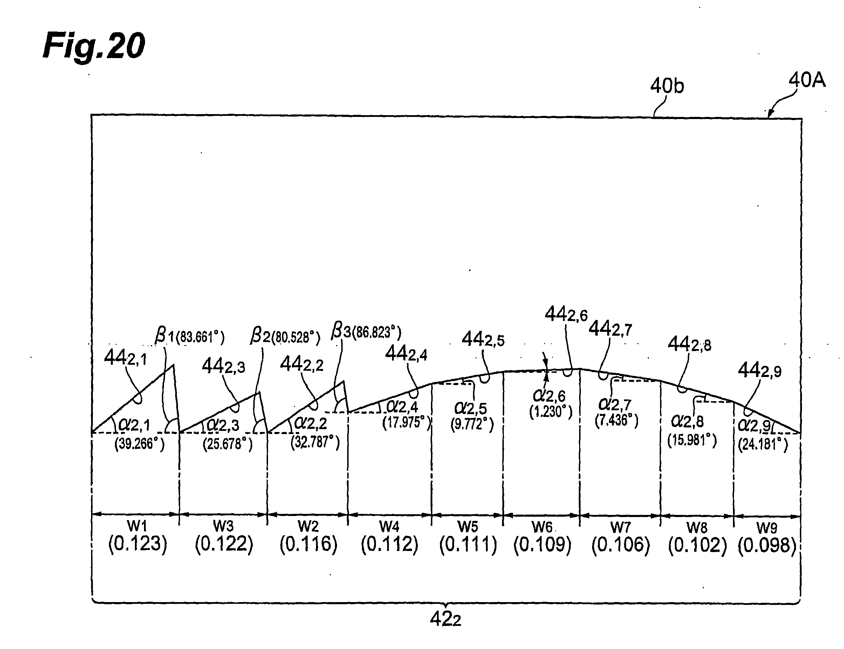

Fig. 19 is a chart showing an area where $0.5 \leq z \leq 1.5$ in the light control unit and illustrating the light path

control part $42_1$. First, when designing the light path control part $42_1$, angles of inclination $\alpha_{1,1}$ to $\alpha_{1,9}$ and positional coordinates of ends of the planar parts $44_{1,1}$ to $44_{1,9}$ were determined by utilizing expressions (13) to (26). Subsequently, a step S was provided between each adjacent pair of the planar parts $44_{1,1}$ to $44_{1,3}$ in order for both ends of the light path control part $42_1$ to attain the same height in the y-axis direction, thus yielding the structure shown in Fig. 20. In Fig. 19, the distances between the ends on the origin O side of adjacent planar parts are shown as $w_1$ to $w_9$. The angles of inclination $\alpha_{1,1}$ to $\alpha_{1,9}$ and $w_1$ to $w_9$ shown in Fig. 19 are as listed in Table 2.

**[TABLE 2]**

| m | $\alpha_{1,\mu}$ (°) | $w_m$ (mm) |
|---|---|---|
| 1 | 36. 157 | 0.123 |
| 2 | 29. 195 | 0.113 |
| 3 | 21. 611 | 0.112 |
| 4 | 13. 487 | 0.113 |
| 5 | 4. 972 | 0.112 |
| 6 | 3. 725 | 0.111 |
| 7 | 12. 363 | 0.109 |
| 8 | 20. 707 | 0.106 |
| 9 | 28. 570 | 0.102 |

$\beta_1$, $\beta_2$ which are angles of inclination of tilted surfaces constituting the steps S with respect to a plane parallel to the exit surface 40b shown in Fig. 19 are 80.528° and 83.661°, respectively.

Fig. 20 is a chart showing an area where $1.5 \leq z \leq 2.5$ in the light control unit and illustrating the light path control part $42_2$. First, when designing the light path control part $42_2$, angles of inclination $\alpha_{2,1}$ to $\alpha_{2,9}$ and positional coordinates of ends of the planar parts $44_{2,1}$ to $44_{2,9}$ were determined by utilizing expressions (13) to (26). In the light path control part $42_2$, steps S are provided in order for both ends of the light path control part $42_2$ to have the same height in the y-axis direction. By providing the steps S, the planar parts $44_{2,2}$ and $44_{2,3}$ designed by utilizing expressions (13) to (26) are rearranged. In Fig. 20, the distances between the ends on the origin O side of adjacent planar parts are shown as $w_1$ to $w_9$ as in Fig. 19. The angles of inclination $\alpha_{2,1}$ to $\alpha_{2,9}$ and $w_1$ to $w_9$ shown in Fig. 20 are as listed in Table 3.

**[TABLE 3]**

| m | $\alpha_{2,\mu}$ (°) | $w_m$ (mm) |
|---|---|---|
| 1 | 39. 266 | 0. 123 |
| 2 | 32. 787 | 0. 116 |
| 3 | 25. 678 | 0. 122 |
| 4 | 17. 975 | 0. 112 |
| 5 | 9. 772 | 0. 111 |
| 6 | 1. 230 | 0. 109 |
| 7 | 7. 436 | 0. 106 |
| 8 | 15. 981 | 0. 102 |
| 9 | 24. 181 | 0. 098 |

$\beta_1$, $\beta_2$, $\beta_3$ which are angles of inclination of tilted surfaces constituting the steps S with respect to a plane parallel to the exit surface 40b shown in Fig. 20 are 83.661°, 80.528°, and 86.823°, respectively.

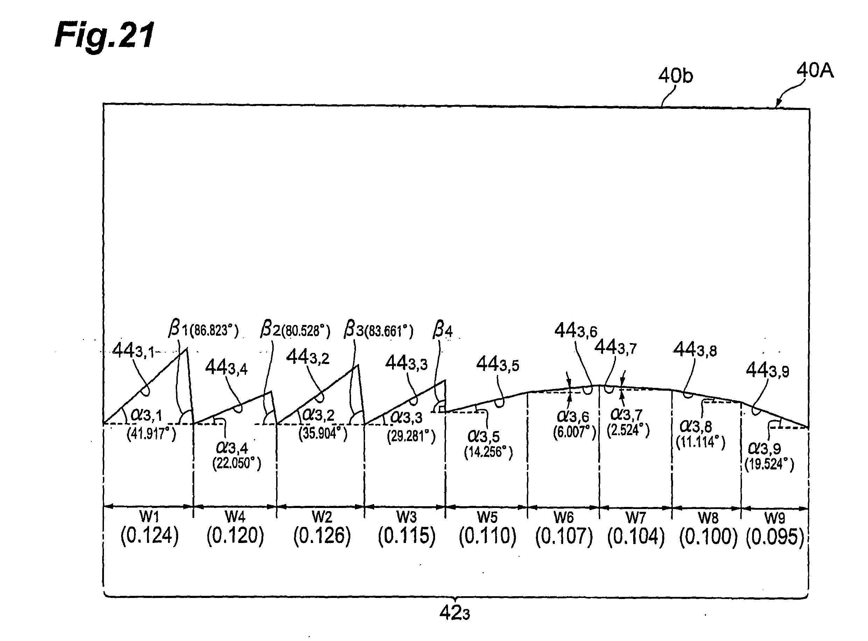

Fig. 21 is a chart showing an area where $2.5 \leq z \leq 3.5$ in the light control unit and illustrating the light path control part $42_3$. First, when designing the light path control part $42_3$, angles of inclination $\alpha_{3,1}$ to $\alpha_{3,9}$ and positional coordinates of ends of the planar parts $44_{3,1}$ to $44_{3,9}$ were determined by utilizing expressions (13) to (26). In the light path control part $42_3$, steps S are provided in order for both ends of the light path control part $42_3$ to have the same height in the y-axis direction. In the light path control part $42_3$, the planar parts $44_{3,2}$ to $44_{3,4}$ designed by utilizing expressions (13) to (26) are rearranged. In Fig. 21, the distances between the ends on the origin O side of adjacent planar parts are shown as $w_1$ to $w_9$ as in Fig. 19. The angles of inclination $\alpha_{3,1}$ to $\alpha_{3,9}$ and $w_1$ to $w_9$ shown in Fig. 21 are as listed in Table 4.

**[TABLE 4]**

| m | $\alpha_{3,\mu}$ (°) | $w_m$ (mm) |
|---|---|---|
| 1 | 41. 917 | 0. 124 |
| 2 | 35. 904 | 0. 126 |
| 3 | 29. 281 | 0. 115 |
| 4 | 22. 050 | 0. 120 |
| 5 | 14. 256 | 0. 110 |
| 6 | 6. 007 | 0. 107 |
| 7 | 2. 524 | 0. 104 |
| 8 | 11. 114 | 0. 100 |
| 9 | 1 9. 524 | 0. 095 |

$\beta_1$, $\beta_2$, $\beta_3$, $\beta_4$ which are angles of inclination of tilted surfaces constituting the steps S with respect to a plane parallel to the exit surface 40b shown in Fig. 21 are 86.823°, 80.528°, 83.661°, and 90.000°, respectively.

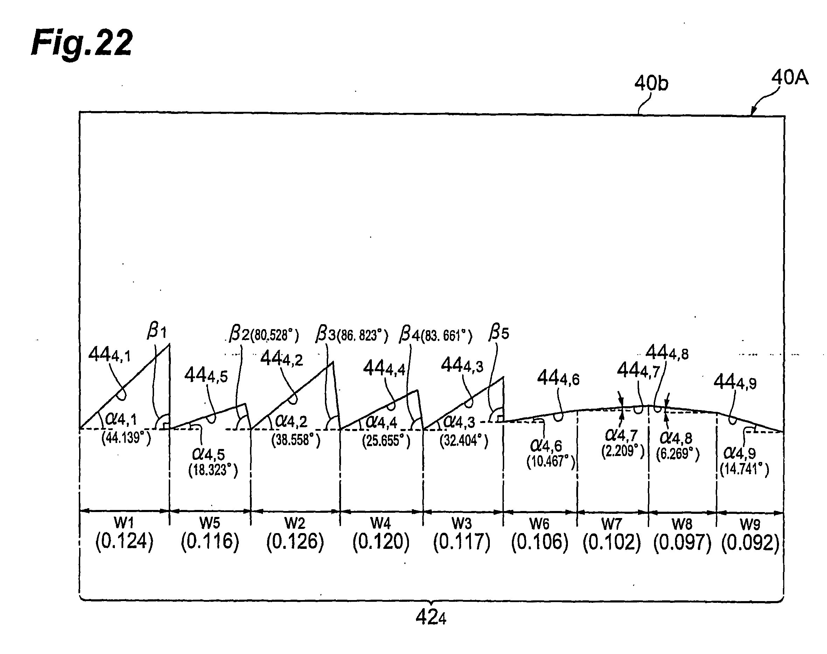

Fig. 22 is a chart showing an area where $3.5 \leq z \leq 4.5$ in the light control unit and illustrating the light path control part $42_4$. First, when designing the light path control part $42_4$, angles of inclination $\alpha_{4,1}$ to $\alpha_{4,9}$ and positional coordinates of ends of the planar parts $44_{4,1}$ to $44_{4,9}$ were determined by utilizing expressions (13) to (26). In the light path control part $42_4$, steps S are provided in order for both ends of the light path control part $42_4$ to have the same height in the y-axis direction. By providing the steps S, the planar parts $44_{4,2}$ to $44_{4,5}$ designed by utilizing expressions (13) to (26) are rearranged. In Fig. 22, the distances between the ends on the origin O side of adjacent planar parts are shown as $w_1$ to $w_9$. The angles of inclination $\alpha_{4,1}$ to $\alpha_{4,9}$ and $w_1$ to $w_9$ shown in Fig. 22 are as listed in Table 5.

**[TABLE 5]**

| m | $\alpha_{4,\mu}$ (°) | $w_m$ (mm) |
|---|---|---|
| 1 | 44. 139 | 0. 124 |
| 2 | 38. 558 | 0. 126 |
| 3 | 32. 404 | 0. 117 |
| 4 | 25. 655 | 0. 120 |
| 5 | 18. 323 | 0. 116 |
| 6 | 10. 467 | 0. 106 |
| 7 | 2. 209 | 0. 102 |
| 8 | 6. 269 | 0. 097 |
| 9 | 14. 741 | 0. 092 |

$\beta_1$, $\beta_2$, $\beta_3$, $\beta_4$, $\beta_5$ which are angles of inclination of tilted surfaces constituting the steps S with respect to a plane parallel to the exit surface 40b shown in Fig. 22 are 90.000°, 80.528°, 86.823°, 83.661°, and 90.000°, respectively.

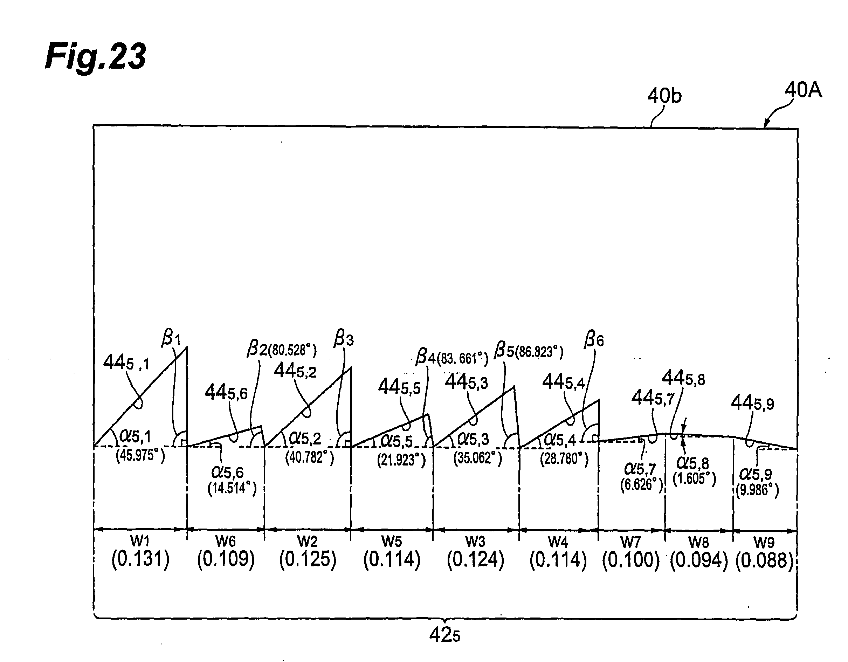

Fig. 23 is a chart showing an area where $4.5 \leq z \leq 5.5$ in the light control unit and illustrating the light path control part $42_5$. First, when designing the light path control part $42_5$, angles of inclination $\alpha_{5,1}$ to $\alpha_{5,9}$ and positional coordinates of ends of the planar parts $44_{5,1}$ to $44_{5,9}$ wee determined by utilizing expressions (13) to (26). In the light path control part $42_5$, steps S are provided in order for both ends of the light path control part $42_5$ to have the same height in the y-axis direction. By providing the steps S, the planar parts $44_{5,2}$ to $44_{5,6}$ designed by utilizing expressions (13) to (26) are rearranged. In Fig. 23, the distances between the ends on the origin O side of adjacent planar parts are shown as $w_1$ to $w_9$. The angles of inclination $\alpha_{5,1}$ to $\alpha_{5,9}$ and $w_1$ to $w_9$ shown in Fig. 23 are as listed in Table 6.

**[TABLE 6]**

| m | $\alpha_{5,\mu}$ (°) | $w_m$ (mm) |
|---|---|---|
| 1 | 45. 975 | 0. 131 |
| 2 | 40. 782 | 0. 125 |
| 3 | 35. 062 | 0. 124 |
| 4 | 28. 780 | 0. 114 |
| 5 | 21. 923 | 0. 114 |
| 6 | 14. 514 | 0. 109 |
| 7 | 6. 626 | 0. 100 |
| 8 | 1. 605 | 0. 094 |
| 9 | 9. 986 | 0. 088 |

$\beta_1$, $\beta_2$, $\beta_3$, $\beta_4$, $\beta_5$, $\beta_6$ which are angles of inclination of tilted surfaces constituting the steps S with respect to a plane parallel to the exit surface 40b shown in Fig. 23 are 90.000°, 80.528°, 90.000°, 83.661°, 86.823°, and 90.000°, respectively.

As mentioned above, an area where $5.5 \leq z \leq 15$ has a plurality of light path control parts 43. In this example, the light control unit 40A is designed such that each light path control part 43 has nine prism parts. In this case, $\xi^\alpha_m$, $\xi^\beta_m$ were allocated in the light path control part 43 as shown in Table 7.

**[TABLE 7]**

| m | $(\xi^\alpha_m, \xi^\beta_m)$ |
|---|---|
| 1 | (-20° , 20° ) |
| 2 | (-15° , 15° ) |
| 3 | (- 0° , 10° ) |
| 4 | (-5° , 5° ) |
| 5 | (0° , 0° ) |
| 6 | (-5° , 5° ) |
| 7 | (-10° , 10° ) |
| 8 | (-15° , 15° ) |
| 9 | (-20° , 2 0° ) |

Tables 8 to 17 show calculated results of angles of inclination $\alpha_m$, $\beta_m$ of side faces $46b_m$, $46c_m$ in the prism parts in the light path control parts 43 under the foregoing condition. For the respective light path control parts 43, Tables 8 to 17 show the angles of inclination $\alpha_m$, $\beta_m$ of side faces $46b_m$, $46c_m$ in their prism parts.

In the case where z = 5.5, Table 8 shows only the angle of inclination $\beta_m$ of the side face $46c_m$ without showing $\alpha_m$, since this corresponds to the boundary between the first and second regions 41A and 41B. The angle of inclination $\beta_m$ in the case where z = 5.5 is calculated as follows. First, a prism part is supposed to have a prism apex positioned where z = 5.5. Subsequently, the angle of inclination $\beta_m$ is computed such that the light $f2_i$ from the light source 32 is once refracted by the side face $46c_m$ and then emitted from the exit surface 40b with an output angle of 20°.

Table 17 does not show the cases where m = 5 to 9, since the position where z = 15 in one light control unit 40A corresponds to the position of the plane P shown in Figs. 2 and 17, i.e., the center position of the corresponding area 41.

**[TABLE 8]**

| m | z(mm) | $\alpha_m$ (°) | $\beta_m$(°) |
|---|---|---|---|
|   | 5. 5 | - | 47. 471 |

(continued)

| m | z(mm) | $\alpha_m$ (°) | $\beta_m$(°) |
|---|---|---|---|
| 1 | 5. 61111 | 64. 16 | 78. 428 |
| 2 | 5. 72222 | 62. 893 | 77. 14 |
| 3 | 5. 83333 | 61. 615 | 75. 824 |
| 4 | 5. 94444 | 60. 3333 | 74. 486 |
| 5 | 6. 05556 | 62. 39 | 72. 315 |
| 6 | 6. 16667 | 63. 783 | 73. 48 |
| 7 | 6. 27778 | 65. 161 | 74. 638 |
| 8 | 6. 38889 | 66. 515 | 75. 782 |
| 9 | 6. 5 | 66. 24 | 77. 329 |

[TABLE 9]

| m | z(mm) | $\alpha_m$ (°) | $\beta_m$(°) |
|---|---|---|---|
| 1 | 6. 61111 | 64. 666 | 77. 663 |
| 2 | 6. 72222 | 63. 403 | 76. 364 |
| 3 | 6. 83333 | 62. 13 | 75. 038 |
| 4 | 6. 94444 | 60. 853 | 73. 69 |
| 5 | 7. 05556 | 62. 91 | 71. 534 |
| 6 | 7. 16667 | 64. 302 | 72. 708 |
| 7 | 7. 27778 | 65. 679 | 73. 876 |
| 8 | 7. 38889 | 67. 033 | 75. 031 |
| 9 | 7. 5 | 66. 759 | 76. 575 |

[TABLE 10]

| m | z(mm) | $\alpha_m$ (°) | $\beta_m$(°) |
|---|---|---|---|
| 1 | 7. 61111 | 65. 189 | 76. 897 |
| 2 | 7. 72222 | 63. 931 | 75. 59 |
| 3 | 7. 83333 | 62. 662 | 74. 255 |
| 4 | 7. 94444 | 61. 39 | 72. 899 |
| 5 | 8. 05556 | 63. 448 | 70. 755 |
| 6 | 8. 16667 | 64. 84 | 71. 939 |
| 7 | 8. 27778 | 66. 216 | 73. 117 |
| 8 | 8. 38889 | 67. 568 | 74. 281 |
| 9 | 8. 5 | 67. 295 | 75. 824 |

[TABLE 11]

| m | z (mm) | $\alpha_m$ (°) | $\beta_m$(°) |
|---|---|---|---|
| 1 | 8. 61111 | 65. 728 | 76. 136 |

(continued)

| m | z (mm) | $\alpha_m$ (°) | $\beta_m$(°) |
|---|---|---|---|
| 2 | 8. 72222 | 64. 475 | 74. 821 |
| 3 | 8. 83333 | 63. 211 | 73. 479 |
| 4 | 8. 94444 | 61. 944 | 72. 115 |
| 5 | 9. 05556 | 64. 004 | 69. 983 |
| 6 | 9. 16667 | 65. 395 | 71. 176 |
| 7 | 9. 27778 | 66. 77 | 72. 364 |
| 8 | 9. 38889 | 68. 121 | 73. 537 |
| 9 | 9. 5 | 67. 848 | 75. 08 |

[TABLE 12]

| m | z(mm) | $\alpha_m$ (°) | $\beta_m$(°) |
|---|---|---|---|
| 1 | 9. 61111 | 66. 285 | 75. 383 |
| 2 | 9. 72222 | 65. 037 | 74. 061 |
| 3 | 9. 83333 | 63.778 | 72. 712 |
| 4 | 9. 94444 | 62. 515 | 71. 343 |
| 5 | 10. 05556 | 64. 578 | 69. 222 |
| 6 | 10. 16667 | 65. 968 | 70. 423 |
| 7 | 10. 27778 | 67. 342 | 71. 619 |
| 8 | 10. 38889 | 68. 692 | 72. 802 |
| 9 | 10. 5 | 68. 419 | 74. 345 |

[TABLE 13]

| m | z(mm) | $\alpha_m$ (°) | $(\beta_m$(°) |
|---|---|---|---|
| 1 | 10. 61111 | 66. 859 | 74. 641 |
| 2 | 10. 72222 | 65. 617 | 73. 314 |
| 3 | 10. 83333 | 64. 363 | 71. 959 |
| 4 | 10. 94444 | 63. 105 | 70. 585 |
| 5 | 11. 05556 | 65. 17 | 68. 473 |
| 6 | 11.16667 | 66. 559 | 69. 682 |
| 7 | 11. 27778 | 67. 932 | 70. 887 |
| 8 | 11. 38889 | 69. 281 | 72. 079 |
| 9 | 11. 5 | 69. 008 | 73. 622 |

[TABLE 14]

| m | z(mm) | $\alpha_m$ (°) | $\beta_m$(°) |
|---|---|---|---|
| 1 | 11. 61111 | 67. 451 | 73. 913 |
| 2 | 11. 72222 | 66. 214 | 72. 579 |

(continued)

| m | z(mm) | $\alpha_m$ (°) | $\beta_m$(°) |
|---|---|---|---|
| 3 | 11. 83333 | 64. 965 | 71. 221 |
| 4 | 11. 94444 | 63. 712 | 69. 843 |
| 5 | 12. 05556 | 65. 78 | 67. 74 |
| 6 | 12. 16667 | 67. 168 | 68. 957 |
| 7 | 12. 27778 | 68. 54 | 70. 168 |
| 8 | 12. 38889 | 69. 888 | 71. 368 |
| 9 | 12. 5 | 69. 614 | 72. 913 |

**[TABLE 15]**

| m | z(mm) | $\alpha_m$ (°) | $\alpha_m$(°) |
|---|---|---|---|
| 1 | 12. 61111 | 68. 06 | 73. 198 |
| 2 | 12. 72222 | 66. 828 | 71. 861 |
| 3 | 12. 83333 | 65. 585 | 70. 499 |
| 4 | 12. 94444 | 64. 337 | 69. 119 |
| 5 | 13. 05556 | 66. 409 | 67. 023 |
| 6 | 13. 16667 | 67. 797 | 68. 247 |
| 7 | 13. 27778 | 69. 167 | 69. 466 |
| 8 | 13. 38889 | 70. 514 | 70. 673 |
| 9 | 13. 5 | 70. 239 | 72. 219 |

**[TABLE 16]**

| m | z(mm) | $\alpha_m$ (°) | $\beta_m$(°) |
|---|---|---|---|
| 1 | 13. 61111 | 68. 687 | 72. 5 |
| 2 | 13. 72222 | 67. 461 | 71. 16 |
| 3 | 13. 83333 | 66. 223 | 69. 795 |
| 4 | 13. 94444 | 64. 981 | 68. 413 |
| 5 | 14. 05556 | 67. 058 | 66. 324 |
| 6 | 14. 16667 | 68. 444 | 67. 554 |
| 7 | 14. 27778 | 69. 813 | 68. 78 |
| 8 | 14. 38889 | 71. 158 | 69. 994 |
| 9 | 14. 5 | 70. 881 | 71. 541 |

**[TABLE 17]**

| m | z(mm) | $\alpha_m$ (°) | $\beta_m$ (°) |
|---|---|---|---|
| 1 | 14. 61111 | 69. 332 | 71. 82 |
| 2 | 14. 72222 | 68. 111 | 70. 477 |
| 3 | 14. 83333 | 66. 879 | 69. 11 |

(continued)

| m | z(mm) | $\alpha_m$ (°) | $\beta_m$ (°) |
|---|---|---|---|
| 4 | 14. 94444 | 65. 643 | 67. 726 |

In the light control unit 40A, the structure of the area where $-15.0 \leq z \leq -0.5$ is mirror symmetric to the structure of the area where $0.5 \leq z \leq 15.0$ about the depicted xy plane.

Results of a simulation of luminance angle distribution for the above-mentioned light control unit 40A will now be explained. The simulation was performed for the area between two planes P shown in Fig. 17. Specifically, the simulation was performed while assuming periodic boundary conditions at the position of the plane P with respect to the z-axis direction and at both ends of a predetermined area (having a width of 112 mm in the x-axis direction in this example). Ray tracing was employed as a simulation technique.

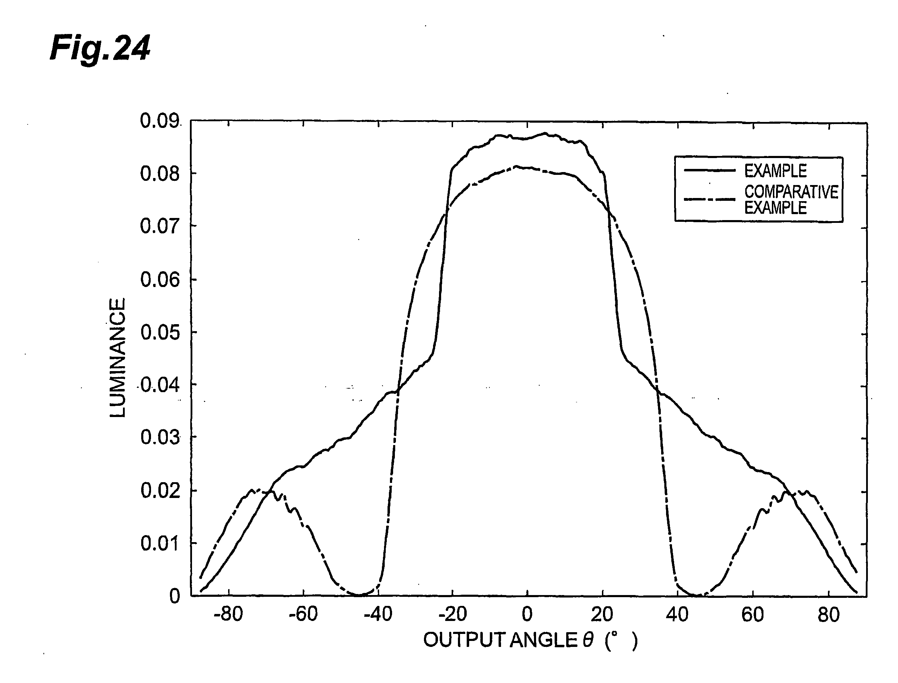

Fig. 24 is a view showing the results of simulation of luminance angle distribution. The abscissa and ordinate in Fig. 24 indicate output angle and luminance, respectively. A luminance angle distribution as simulation results in the light control unit 40A is represented by a solid line as an example in Fig. 24. A luminance angle distribution obtained when combining a conventional diffuser with a prism sheet formed with a plurality of prism parts each having an apex angle of 90° instead of using the light control plate 40 is represented by a broken line as a comparative example in Fig. 24. The illumination method and boundary condition in the comparative example are the same as those in the example.

As shown in Fig. 24, the light control plate 40 in this example can realize a high luminance within the range of -20° to 20°, and can mainly converge and output light within the range of 20° to 20°. This example controls the output angle better and can make the luminance angle distribution more uniform within the range of -20° to 20° as compared with the comparative example.

The values and the like shown in the above-mentioned example are merely examples of those in the light control plate 40, which do not restrict the present invention.

Though the embodiment and example of the light control plate, surface light source device, and transmission type image display apparatus in accordance with the present invention are explained in the foregoing, the present invention is not restricted thereto. For example, though expressions including correction terms $\Delta Z^{\alpha}_m$, $\Delta H^{\alpha}_m$, $\Delta Z^{\beta}_m$, and $\Delta H^{\beta}_m$ are utilized for determining the angles of inclination $\alpha_m$, $\beta_m$ of the prism part $46_m$, these correction terms are not required to be used when the pitch width between adjacent two prism parts $46_m$, $46_{m+1}$ (length between the prism apexes $46a_m$, $46a_{m+1}$) is sufficiently smaller than, e.g., about 1/10 or less of, H or L.

In the foregoing explanations, the corresponding area 41 has such a structure that its halves are symmetric about its center position, and defining the structure of one half of the corresponding area 41 can omit defining the structure of the remaining half. However, the structure of the remaining half may newly be defined by a similar method.

The structure of the light path control part $42_0$ located in the fourth regions $41A_1$, $41C_1$ is defined while assuming that light is incident thereon in a direction parallel to the normal N. However, the structure may be determined by utilizing an expression similar to that in the case of the light path control part $42_k$.

When defining the structure of the first light path control part 42, more specifically that of the first light path control parts $42_0$, $42_k$, the sizes of the first to Mth planar parts $44_{0,1}$ to $44_{0,M}$, $44_{k,1}$ to $44_{k,m}$ are defined such that light incident on the first light path control parts $42_0$, $42_k$ attains a fixed luminance angle distribution within a predetermined angle range. For widening the light within the predetermined angle range and emitting thus widened light, however, it will be sufficient if at least the angles of inclination of the first to Mth planar parts $44_{0,1}$ to $44_{0,M}$, $44_{k,1}$ to $44_{k,M}$ are defined. Therefore, the structure of the light path control parts $42_0$, $42_k$ can also be determined without defining the pitch ratios $L_{0,1}$ to $L_{0,M}$ and solid angle ratios $\omega_{k,1}$ to $\omega_{k,M}$ of the first to Mth planar parts $44_{0,1}$ to $44_{0,M}$, $44_{k,1}$ to $44_{k,M}$. When no solid angle ratios $\omega_{k,1}$ to $\omega_{k,M}$ of the first to Mth planar parts $44_{k,1}$ to $44_{k,M}$ are defined, the light path control part $42_k$ having no steps S can be designed.

As mentioned when explaining the simulation results, a plurality of light control units 40A corresponding to respective light sources 30 may be made and arranged in parallel, so as to yield one light control plate 40. Hence, the present invention can relate to a light control plate which is arranged separated from a plurality of light sources 30 disposed in parallel and has respective light control units 40A corresponding to the light sources 30, wherein the rear face (main face) 40a of each light control unit 40A is constituted by a first region 41A including an area directly above the light source 30 and second regions 4 1 B provided on both sides of the first region 4 1 A, and wherein a plurality of light control units 40A are arranged in the disposing direction of the light sources 30.

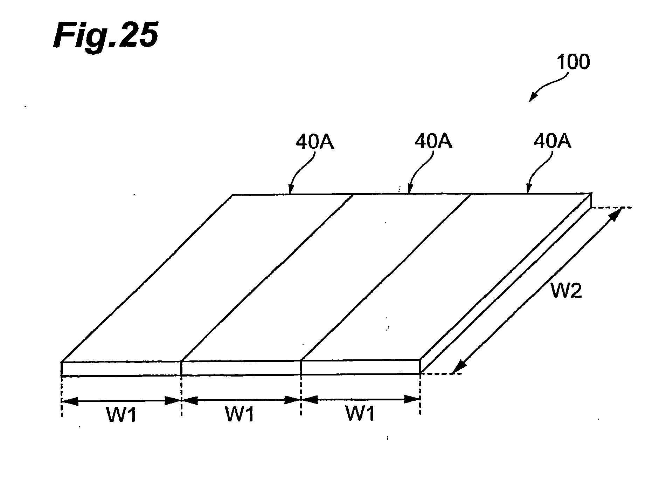

Fig. 25 is a schematic view of an example of a light control plate constituted by three light control units 40A. The light control plate 100 shown in Fig. 25 is constructed by connecting three light control units 40A, each extending in one direction, in series in a direction substantially orthogonal to the extending direction. The length W2 of each light control unit 40A in its extending direction shown in Fig. 25 is 90 mm, for example, while the width of each light control unit 40A is 30 mm, for example, as in the simulation. When designing one light control unit 40A, making a plurality of light control units 40A according to the designing, and then connecting them together into one light control plate 100 as mentioned above, it will be sufficient if the light path control parts 42, 43 are designed for about a half area of one light control unit 40A, whereby the time required for the designing step can be reduced.

**Claims**

1. A light control plate arranged separated from a plurality of light sources disposed with a gap therebetween, the light control plate having:

    a main face facing the plurality of light sources; and
    a flat exit surface opposing the main face and emitting light from the plurality of light sources incident on the main face;
    wherein a corresponding area for a space between two of the light sources adjacent to each other in the main face has:

        first and third regions formed with a plurality of first light path control parts, arranged in the disposing direction of the plurality of light sources, for widening first incident light within a predetermined angle range and emitting thus widened light from the exit surface; and
        a second region arranged between the first and third regions and formed with at least one second light path control part for emitting second incident light within the predetermined angle range from the exit surface;
        wherein the first incident light is a light component outputted from the light source closer to the first light path control part in the two adjacent light sources;
        wherein the second incident light is constituted by respective light components outputted from the two adjacent light sources;
        wherein the first light path control part includes a plurality of planar parts extending in one direction and receiving the first incident light;
        wherein the first light path control part widens the first incident light within the predetermined range and emits thus widened light from the exit surface by utilizing refraction of the first incident light incident on the plurality of planar parts;
        wherein the second light path control part has a plurality of prism parts extending in the one direction, having a substantially triangular cross-sectional form, and receiving the second incident light; and
        wherein the second light path control part emits the second incident light within the predetermined angle range from the exit surface by utilizing total reflection within the plurality of prism parts of the second incident light incident on the prism parts.

2. A light control plate according to claim 1, wherein respective angles of inclination of the plurality of planar parts with respect to the exit surface are defined such that the first incident light incident on each planar part is refracted in such a direction as to be emitted from the exit surface with an output angle within the predetermined angle range;
    wherein each of the plurality of prism parts has first and second side faces;
    wherein the angles of inclination of the first and second side faces with respect to the exit surface are defined such that the second incident light incident on the second side face is totally reflected by the first side face in such a direction as to be emitted from the exit surface with an output angle within the predetermined angle range, while the second incident light incident on the first side face is totally reflected by the second side face in such a direction as to be emitted from the exit surface with an output angle within the predetermined angle range;
    wherein the second incident light incident on the first side face is a light component outputted from the light source closer to the first side face in the adjacent two light sources; and
    wherein the second incident light incident on the second side face is a light component outputted from the light source closer to the second side face in the adjacent two light sources.

3. A light control plate according to claim 2, wherein the first incident light components incident on the plurality of planar parts have respective output angles different from each other;
    wherein angles selected at fixed angle intervals from within the predetermined angle range are allocated to the second incident light components totally reflected by the respective first side faces in the plurality of prism parts; and
    wherein angles selected at fixed angle intervals from within the predetermined angle range are allocated to the second incident light components totally reflected by the respective second side faces in the plurality of prism parts.

4. A light control plate according to one of claims 1 to 3, wherein the second region has a plurality of second light path control parts.

5. A light control plate according to one of claims 1 to 4, wherein the plurality of planar parts in the first light path control parts have respective sizes defined such that light components incident on the plurality of planar parts and then emitted from the exit surface within the predetermined angle range have a substantially uniform luminance angle distribution in the predetermined angle range.

6. A light control plate according to one of claims 1 to 5, wherein each of the first and third regions has a fourth region positioned directly above the light source and a fifth region positioned between the second and fourth regions; wherein the fourth region is formed with at least one of the plurality of first light path control parts; wherein the first light path control part within the fourth region has a recessed cross-sectional form, while the plurality of planar parts in the first light path control part are arranged in series so as to construct a surface of the first light path control part; wherein the fifth region is formed with a plurality of first light path control parts; and wherein a step is formed between planar parts adjacent to each other and positioned on the second or fourth region side in the plurality of planar parts in each of the first light path control parts within the fifth region.

7. A surface light source device comprising:

a plurality of light sources disposed with a gap therebetween; and
the light control plate according to one of claims 1 to 6 arranged separated from the plurality of light sources

8. A transmission type image display apparatus comprising:

the surface light source device according to claim 7; and
a transmission type image display part arranged separated from the surface light source device in a direction substantially orthogonal to the disposing direction of the plurality of light sources in the surface light source device.

EP 2 053 430 A2

**Fig.1**

Fig.2

*Fig.3*

**Fig.4**

EP 2 053 430 A2

# Fig.5

EP 2 053 430 A2

Fig.6

# *Fig.7*

EP 2 053 430 A2

## Fig.8

Fig.9

*Fig.10*

Fig.11

**Fig.12**

**Fig.13**

EP 2 053 430 A2

## Fig.14

# Fig.15

*Fig.16*

EP 2 053 430 A2

**Fig.17**

EP 2 053 430 A2

**Fig.18**

# Fig.19

EP 2 053 430 A2

Fig.20

EP 2 053 430 A2

## Fig.21

40b

40A

$\beta_1$(86.823°)  $\beta_2$(80.528°)  $\beta_3$(83.661°)  $\beta_4$

44$_{3,1}$  44$_{3,4}$  44$_{3,2}$  44$_{3,3}$  44$_{3,5}$  44$_{3,6}$ 44$_{3,7}$  44$_{3,8}$  44$_{3,9}$

$\alpha_{3,1}$
(41.917°)  $\alpha_{3,4}$
(22.050°)  $\alpha_{3,2}$
(35.904°)  $\alpha_{3,3}$
(29.281°)  $\alpha_{3,5}$
(14.256°)  $\alpha_{3,6}$
(6.007°)  $\alpha_{3,7}$
(2.524°)  $\alpha_{3,8}$
(11.114°)  $\alpha_{3,9}$
(19.524°)

| W1<br>(0.124) | W4<br>(0.120) | W2<br>(0.126) | W3<br>(0.115) | W5<br>(0.110) | W6<br>(0.107) | W7<br>(0.104) | W8<br>(0.100) | W9<br>(0.095) |

42$_3$

EP 2 053 430 A2

**Fig.22**

EP 2 053 430 A2

## Fig.23

# Fig.24

EP 2 053 430 A2

# Fig.25

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006351519 A